# EUROPEAN PATENT APPLICATION

(11) **EP 4 848 674 A1**
(43) Date of publication of application: **02.12.2026**
(21) Application number: 25751099.0
(22) Date of filing: 15.01.2025
(51) Int. Cl.: H04L 27/00

(54) **SIGNAL TRANSMISSION METHOD AND APPARATUS**

(30) Priority: 07.02.2024 CN 202410176406
(71) Applicant: HUAWEI TECHNOLOGIES CO., LTD., Shenzhen, Guangdong 518129 (CN)
(72) Inventor: MA, Qianli, Shenzhen, Guangdong 518129 (CN); HUANG, Huang, Shenzhen, Guangdong 518129 (CN)
(74) Representative: Huawei European IPR
(86) International application number: PCT/CN2025/072475
(87) International publication number: WO 2025/167497

(57) **Abstract**

This application provides a signal transmission method and apparatus. The method includes: receiving first information, where the first information indicates a first index corresponding to a first signal, the first signal is carried on a single carrier for transmission, the first index indicates a first parameter group in a first association relationship, the first association relationship includes a plurality of indexes and a plurality of parameter groups respectively corresponding to the plurality of indexes, the first parameter group is a parameter group associated with the first index, the parameter group includes a sampling frequency and/or a symbol rate, the sampling frequency is equal to a sampling frequency corresponding to one subcarrier spacing of a multi-carrier waveform, and a symbol period determined based on the symbol rate is equal to a symbol period of one subcarrier spacing of the multi-carrier waveform; and transmitting the first signal based on the first parameter group, so that a communication device can transmit and receive single-carrier and multi-carrier signals based on the same set of parameters, thereby reducing implementation complexity and costs.

## Description

This application claims priority to Chinese Patent Application No. 202410176406.9, filed with the China National Intellectual Property Administration on February 7, 2024 and entitled "SIGNAL TRANSMISSION METHOD AND APPARATUS", which is incorporated herein by reference in its entirety.

### TECHNICAL FIELD

This application relates to the communication field, and more specifically, to a signal transmission method and apparatus.

### BACKGROUND

Waveforms in communication systems are classified into single-carrier waveforms and multi-carrier waveforms. A typical multi-carrier waveform includes an orthogonal frequency division multiplexing (orthogonal frequency division multiplexing, OFDM) waveform. However, the OFDM waveform has a high peak-to-average power ratio (peak-to-average power ratio, PAPR), which may cause signal distortion. As a result, orthogonality between sub-channels is damaged, and interference is generated, causing system performance to deteriorate. In comparison, the single-carrier waveform (for example, a single-carrier quadrature amplitude modulation (single-carrier quadrature amplitude modulation, SC-QAM) waveform or a single-carrier frequency domain equalization (single-carrier frequency domain equalization, SC-FDE) waveform) has lower PAPR, and the transmit end does not involve time-frequency transformation, t resulting in low complexity. However, when a communication device is capable of both receiving and sending multi-carrier and single-carrier waveforms, to ensure the flexibility of both multi-carrier and single-carrier systems, parameters need to be separately designed for OFDM symbols and single-carrier symbols. That is, in the system, corresponding signals need to be separately designed for the two waveforms, causing both high complexity and high costs.

Therefore, in scenarios of single-carrier and multi-carrier waveforms, how to reduce implementation complexity of the communication device and reduce costs is a problem that urgently needs to be resolved.

### SUMMARY

This application provides a signal transmission method and apparatus. When a communication device is capable of both receiving and sending multi-carrier and single-carrier waveforms, a specific parameter group is configured for the single-carrier waveform, so that the communication device can receive and send a single-carrier signal and a multi-carrier signal based on the same set of parameters, thereby reducing implementation complexity and costs.

According to a first aspect, a signal transmission method is provided. The method includes: receiving first information, where the first information indicates a first index corresponding to a first signal, the first signal is carried on a single carrier for transmission, the first index indicates a first parameter group in a first association relationship, the first association relationship includes a plurality of indexes and a plurality of parameter groups respectively corresponding to the plurality of indexes, the first parameter group is a parameter group associated with the first index, the parameter group includes a sampling frequency and/or a symbol rate, the sampling frequency is equal to a sampling frequency corresponding to one subcarrier spacing of a multi-carrier waveform, and a symbol period determined based on the symbol rate is equal to a symbol period of one subcarrier spacing of the multi-carrier waveform; and transmitting the first signal based on the first parameter group.

The method according to the first aspect may be performed by a terminal device. Unless otherwise specified, in this application, the terminal device may be the terminal device itself, may be a component (for example, a processor, a chip, or a chip system) in the terminal device, or may be a logic module or software that implements all or part of functions of the terminal device. This is not specifically limited herein in this application.

It may be understood that the first signal being carried on the single carrier for transmission may be understood as that the first signal is transmitted between the terminal device and a network device using a single-carrier waveform.

It may be understood that the first association relationship supports signal transmission when the communication device is capable of both receiving and sending multi-carrier and single-carrier waveforms. In addition, after receiving the first information and determining the first parameter group, the terminal device may process and transmit the first signal according to a single-carrier processing procedure.

It may be understood that, in this embodiment of this application, uplink transmission or downlink transmission between the terminal device and the network device is not limited.

By way of example, and not limitation, when the terminal device performs uplink transmission with the network device, that the terminal device transmits the first signal based on the first parameter group may be understood as that the terminal device sends the first signal based on the first parameter group.

By way of example, and not limitation, when the terminal device performs downlink transmission with the network device, that the terminal device transmits the first signal based on the first parameter group may be understood as that the terminal device processes the received first signal based on the first parameter group.

It may be understood that a specific representation of the first association relationship is not limited in embodiments of this application. For example, the first association relationship may be represented in a form of a table.

It may be understood that a specific form in which the sampling frequency or the symbol rate is indicated in the parameter group is not limited in embodiments of this application.

By way of example, and not limitation, the parameter group may explicitly indicate the sampling frequency and the symbol rate, so that the terminal device may determine a symbol period in the first signal based on the first parameter group, and the symbol period in the first signal is aligned with a symbol period of a multi-carrier symbol, thereby implementing multiplexing of the single-carrier waveform and the multi-carrier waveform.

By way of example, and not limitation, the parameter group may explicitly indicate either of the sampling frequency or the symbol rate. For example, the parameter group may indicate the sampling frequency in a form of a sampling frequency (an oversampling factor) or a sampling frequency (1/oversampling factor), where the oversampling factor is a ratio of the sampling frequency to the symbol rate. Therefore, when the sampling frequency is known, the terminal device may obtain a corresponding symbol rate through calculation. It is easy to understand that, when the parameter group indicates the symbol rate in a form of a symbol rate (an oversampling factor) or a symbol rate (1/oversampling factor), the terminal device may determine a corresponding sampling frequency. Based on the sampling frequency and the symbol rate, the terminal device may determine the symbol period in the first signal based on the first parameter group, and the symbol period in the first signal is aligned with the symbol period of the multi-carrier symbol, thereby implementing multiplexing of the single-carrier waveform and the multi-carrier waveform.

It may be understood that, that the sampling frequency is equal to the sampling frequency corresponding to one subcarrier spacing of the multi-carrier waveform may be understood as that, under a same subcarrier spacing, a sampling frequency in each parameter group of the first association relationship is equal to a sampling frequency corresponding to the multi-carrier waveform.

It may be understood that, that the symbol period determined based on the symbol rate is equal to the symbol period of one subcarrier spacing of the multi-carrier waveform may be understood as that, under a same subcarrier spacing, a symbol period determined based on the symbol rate in each parameter group of the first association relationship is equal to a symbol period of the multi-carrier symbol.

Based on the foregoing solution, the terminal device may determine the first parameter group based on the first index and the first association relationship that are indicated by the first information. The first parameter group includes the sampling frequency and/or the symbol rate, and a symbol period of a single-carrier symbol transmitted based on the first parameter group is aligned with the symbol period of the multi-carrier symbol, so that a receiver machine can receive a single-carrier signal and a multi-carrier signal based on the same set of parameters, thereby reducing design complexity of receiver machine parameters and costs of the receiver machine.

With reference to the first aspect, in some implementations of the first aspect, before receiving the first information, the first method further includes: sending second information, where the second information indicates that the terminal device supports transmission of a signal using a single-carrier waveform, or the second information is used to request transmission of a signal using a single-carrier waveform.

The second information may be understood as capability information of the terminal device, to indicate whether the terminal device supports transmission of a signal using a single-carrier waveform. Unless otherwise specified, a specific single-carrier waveform supported by the terminal device is not limited in this application. For example, the terminal device may support single-carrier frequency domain equalization (Single Carrier Frequency Domain Equalization, SC-FDE) transmission.

By way of example, and not limitation, the second information indicates that the terminal device supports transmission of the signal in the single-carrier waveform. In other words, the second information indicates that the terminal device is UE of a single-carrier type. For example, the second information indicates that the UE is UE in a single-carrier waveform by using UE_type=SC.

By way of example, and not limitation, the second information is used to request to transmit a signal using a single-carrier waveform. For example, the second information indicates, by using UE_SC_CONFIG=1, that the UE requests to transmit a signal using a single-carrier waveform.

It may be understood that a trigger condition for the terminal device to send the second information to the network device is not limited in embodiments of this application. For example, the terminal device may send the second information to the network device when a capability of the terminal device is limited, for example, when a battery level is low.

Based on the foregoing solution, the terminal device may send the second information to the network device, so that the network device can send, to the terminal device based on the first association relationship, the first index indicating the first parameter group, thereby improving signal transmission efficiency.

With reference to the first aspect, in some implementations of the first aspect, the sampling frequency=15 kHz × 2*^{C}*, where C is a positive integer.

By way of example, and not limitation, C may be 17, 18, 19, 20, 21, or the like. That is, Fₛ may be 3932.16 MHz, 1966.08 MHz, 983.04 MHz, 491.52 MHz, or the like.

Based on the foregoing solution, a plurality of sampling frequencies may be defined in the first association relationship to adapt to different transmission scenarios, thereby improving flexibility of performing signal transmission by the terminal device based on the first parameter group.

With reference to the first aspect, in some implementations of the first aspect, a modulation scheme corresponding to at least one of the plurality of parameter groups is quadrature amplitude modulation or offset quadrature amplitude modulation, and the sampling frequency is 3932.16 MHz.

It may be understood that a specific form in which the first association relationship indicates the modulation scheme corresponding to the at least one parameter group is not limited in embodiments of this application.

In a possible implementation, in the first association relationship, a quantity of signals in a single symbol may be carried in each parameter group, to indicate the single-carrier modulation scheme. For example, when the quantity of signals in the single symbol carried in the parameter group is 256, it indicates that the single-carrier modulation scheme is QAM; or when the quantity of signals in the single symbol carried in the parameter group is 512, it indicates that the single-carrier modulation scheme is OQAM.

In another possible implementation, in the first association relationship, a separate bit may be set in each index to indicate the single-carrier modulation scheme. For example, each index of the first association relationship may include a first bit and a second bit, where the first bit indicates at least one of the sampling frequency and the symbol rate, and the second bit indicates the single-carrier modulation scheme.

By way of example, and not limitation, the first index may be "0+A", where 0 in the first bit indicates the sampling frequency and/or the symbol rate in the first association relationship, and the second bit "A" indicates that the single-carrier modulation scheme is "QAM". It is easy to understand that a same symbol rate may correspond to different single-carrier modulation schemes.

It may be understood that specific forms of the first bit and the second bit are not limited in this application. For example, the first bit may include four bits, and the second bit may include the first bit.

In still another possible implementation, the network device may add, to the first information, an identifier indicating a modulation scheme of the first signal, so that the terminal device can determine the modulation scheme of the first signal based on the identifier, and determine the corresponding first parameter group in the first association relationship based on the first index. For example, the identifier may indicate, by using a bit "0", that the modulation scheme is QAM, and indicate, by using a bit "1", that the modulation scheme of the single-carrier waveform is "OQAM".

Based on the foregoing solution, the network device may indicate the modulation scheme of the first signal through the first index, so that the terminal device can correctly transmit the first signal based on the first parameter group, thereby improving signal transmission efficiency.

With reference to the first aspect, in some implementations of the first aspect, a modulation scheme corresponding to at least one of the plurality of parameter groups is quadrature amplitude modulation, and the symbol rate is one of 983.04 MHz, 1310.7 MHz, 1966.08 MHz, 2621.4 MHz, or 2949.12 MHz.

With reference to the first aspect, in some implementations of the first aspect, the modulation scheme corresponding to the at least one of the plurality of parameter groups is offset quadrature amplitude modulation, and the symbol rate is one of 1966.08 MHz, 2621.44 MHz, 3932.16 MHz, 5242.8 MHz, or 5898.24 MHz.

With reference to the first aspect, in some implementations of the first aspect, the at least one of the plurality of parameter groups further includes an oversampling factor, and the symbol rate and the oversampling factor meet at least one of the following: the symbol rate is 983.04 MHz, and the oversampling factor is 4/1; the symbol rate is 1966.08 MHz, and the oversampling factor is 2/1; the symbol rate is 1310.7 MHz, and the oversampling factor is 3/1; the symbol rate is 2621.44 MHz, and the oversampling factor is 3/2; the symbol rate is 3932.16 MHz, and the oversampling factor is 1/1; the symbol rate is 5242.8 MHz, and the oversampling factor is 3/4; the symbol rate is 2949.12 MHz, and the oversampling factor is 4/3; or the symbol rate is 5898.24 MHz, and the oversampling factor is 2/3.

Based on the foregoing solution, the terminal device may determine a corresponding symbol rate based on a sampling frequency and an oversampling factor, or the terminal device may determine a corresponding sampling frequency based on a symbol rate and an oversampling factor, thereby improving accuracy of determining the sampling frequency and the symbol rate.

With reference to the first aspect, in some implementations of the first aspect, the at least one of the plurality of parameter groups further includes a roll-off factor, and the roll-off factor and the symbol rate meet one of the following: the symbol rate is 983.04 MHz or 1966.08 MHz, and the roll-off factor is 3; the symbol rate is 983.04 MHz or 1966.08 MHz, and the roll-off factor is 2; the symbol rate is 983.04 MHz or 1966.08 MHz, and the roll-off factor is 1; the symbol rate is 983.04 MHz or 1966.08 MHz, and the roll-off factor is 0.5; the symbol rate is 1310.7 MHz or 2621.44 MHz, and the roll-off factor is 2; the symbol rate is 1310.7 MHz or 2621.44 MHz, and the roll-off factor is 1.25; the symbol rate is 1310.7 MHz or 2621.44 MHz, and the roll-off factor is 0.5; the symbol rate is 1966.08 MHz or 3932.16 MHz, and the roll-off factor is 1; the symbol rate is 1966.08 MHz or 3932.16 MHz, and the roll-off factor is 0.5; the symbol rate is 1966.08 MHz or 3932.16 MHz, and the roll-off factor is 0.25; the symbol rate is 2621.4 MHz or 5242.8 MHz, and the roll-off factor is 0.5; the symbol rate is 2621.4 MHz or 5242.8 MHz, and the roll-off factor is 0.125; the symbol rate is 2949.12 MHz or 5898.24 MHz, and the roll-off factor is 0.33; or the symbol rate is 2949.12 MHz or 5898.24 MHz, and the roll-off factor is 0.125.

Based on the foregoing solution, the at least one parameter group in the first association relationship may include the roll-off factor used to transmit the first signal, so that the terminal device can generate a filtering coefficient and generate a filtering shape based on the symbol rate and the roll-off factor, to correctly transmit the first signal.

With reference to the first aspect, in some implementations of the first aspect, at least one of the plurality of parameter groups further includes a first bandwidth, the first bandwidth is used to transmit the first signal, and the symbol rate and the first bandwidth meet at least one of the following: the symbol rate is 983.04 MHz or 1966.08 MHz, and the first bandwidth is 4 GHz; the symbol rate is 983.04 MHz or 1966.08 MHz, and the first bandwidth is 3 GHz; the symbol rate is 983.04 MHz or 1966.08 MHz, and the first bandwidth is 2 GHz; the symbol rate is 983.04 MHz or 1966.08 MHz, and the first bandwidth is 1.5 GHz; the symbol rate is 1310.7 MHz or 2621.44 MHz, and the first bandwidth is 4 GHz; the symbol rate is 1310.7 MHz or 2621.44 MHz, and the first bandwidth is 3 GHz; the symbol rate is 1310.7 MHz or 2621.44 MHz, and the first bandwidth is 2 GHz; the symbol rate is 1966.08 MHz or 3932.16 MHz, and the first bandwidth is 4 GHz; the symbol rate is 1966.08 MHz or 3932.16 MHz, and the first bandwidth is 3 GHz; the symbol rate is 1966.08 MHz or 3932.16 MHz, and the first bandwidth is 2.5 GHz; the symbol rate is 2621.4 MHz or 5242.8 MHz, and the first bandwidth is 4 GHz; the symbol rate is 2621.4 MHz or 5242.8 MHz, and the first bandwidth is 3 GHz; the symbol rate is 2949.12 MHz or 5898.24 MHz, and the first bandwidth is 4 GHz; or the symbol rate is 2949.12 MHz or 5898.24 MHz, and the first bandwidth is 3.4 GHz.

It may be understood that the first bandwidth may be understood as all bandwidths allocated by the network device to the terminal device for transmitting the first signal.

It may be understood that the terminal device may determine the roll-off factor based on the symbol rate and the first bandwidth, and further generate the filter coefficient based on the roll-off factor, to determine the filter shape.

Based on the foregoing solution, the at least one parameter group in the first association relationship may include the first bandwidth, so that the terminal device can determine the roll-off factor based on the symbol rate and the first bandwidth, to generate the filter coefficient and the filter shape, to correctly transmit the first signal.

With reference to the first aspect, in some implementations of the first aspect, the at least one of the plurality of parameter groups further includes a first coefficient, and the first coefficient is a quantity of signals in each single-carrier symbol in the first signal.

It may be understood that the quantity of signals in the single symbol may be understood as a quantity of DFT points, or may be understood as a data length in the single symbol.

With reference to the first aspect, in some implementations of the first aspect, the first coefficient meets one of the following: the modulation scheme of the first signal is quadrature amplitude modulation, and the first coefficient is 256; or the modulation scheme of the first signal is offset quadrature amplitude modulation, and the first coefficient is 512.

With reference to the first aspect, in some implementations of the first aspect, the first association relationship is predefined in a protocol.

According to a second aspect, a signal transmission method is provided. The method includes: sending first information, where the first information indicates a first index corresponding to a first signal, the first signal is carried on a single carrier for transmission, the first index indicates a first parameter group in a first association relationship, the first association relationship includes a plurality of indexes and a plurality of parameter groups respectively corresponding to the plurality of indexes, the first parameter group is a parameter group associated with the first index, the parameter group includes a sampling frequency and/or a symbol rate, the sampling frequency is equal to a sampling frequency corresponding to one subcarrier spacing of a multi-carrier waveform, and a symbol period determined based on the symbol rate is equal to a symbol period of one subcarrier spacing of the multi-carrier waveform; and transmitting the first signal based on the first parameter group.

The method according to the second aspect may be performed by a network device. Unless otherwise specified, in this application, the network device may be the network device itself, or may be a component (for example, a processor, a chip, or a chip system) in the network device, or may be a logic module or software that implements all or some functions of the network device. This is not specifically limited herein in this application.

It may be understood that the first signal being carried on the single carrier for transmission may be understood as that the first signal is transmitted between a terminal device and the network device using a single-carrier waveform.

It may be understood that the first association relationship supports signal transmission when the communication device is capable of both receiving and sending multi-carrier and single-carrier waveforms, and the network device and the terminal device may process and transmit the first signal based on the first parameter group according to a single-carrier processing procedure.

It may be understood that a specific manner in which the network device sends the first information to the terminal device is not limited in embodiments of this application. By way of example, and not limitation, the network device may send the first information to the terminal device based on downlink control information (Downlink Control Information, DCI), radio resource control (Radio Resource Control) information, or a media access control element (Media Access Control Element, MAC CE).

It may be understood that, in this embodiment of this application, uplink transmission or downlink transmission between the terminal device and the network device is not limited.

By way of example, and not limitation, when the terminal device performs uplink transmission with the network device, that the terminal device transmits the first signal based on the first parameter group may be understood as that the terminal device sends the first signal based on the first parameter group.

By way of example, and not limitation, when the terminal device performs downlink transmission with the network device, that the terminal device transmits the first signal based on the first parameter group may be understood as that the terminal device processes the received first signal based on the first parameter group.

It may be understood that a specific representation of the first association relationship is not limited in embodiments of this application. For example, the first association relationship may be represented in a form of a table.

It may be understood that a specific form in which the sampling frequency or the symbol rate is indicated in the parameter group is not limited in embodiments of this application. For a specific form, refer to related descriptions in the first aspect. Details are not described herein again.

It may be understood that, that the sampling frequency is equal to the sampling frequency corresponding to one subcarrier spacing of the multi-carrier waveform may be understood as that, under a same subcarrier spacing, a sampling frequency in each parameter group of the first association relationship is equal to a sampling frequency corresponding to the multi-carrier waveform.

It may be understood that, that the symbol period determined based on the symbol rate is equal to the symbol period of one subcarrier spacing of the multi-carrier waveform may be understood as that, under a same subcarrier spacing, a symbol period determined based on the symbol rate in each parameter group of the first association relationship is equal to a symbol period of the multi-carrier symbol.

Based on the foregoing solution, the network device may send the first information to the terminal device, so that the terminal device may determine the first parameter group based on the first index and the first association relationship that are indicated by the first information, where the first parameter group includes the sampling frequency and/or the symbol rate; and transmit the first signal based on the first parameter group, so that a symbol period of a single-carrier symbol is aligned with the symbol period of the multi-carrier symbol, thereby implementing multiplexing of the single-carrier waveform and the multi-carrier waveform.

With reference to the second aspect, in some implementations of the second aspect, before sending the first information, the method further includes: receiving second information, where the second information indicates that the terminal device supports transmission of a signal using a single-carrier waveform, or the second information is used to request transmission of a signal using a single-carrier waveform.

The second information may be understood as capability information of the terminal device, to indicate whether the terminal device supports transmission of a signal using a single-carrier waveform. For a specific indication manner of the second information, refer to related descriptions in the first aspect. Details are not described herein again.

It may be understood that a trigger condition for the terminal device to send the second information to the network device is not limited in embodiments of this application. For example, the terminal device may send the second information to the network device when a capability of the terminal device is limited, for example, when a battery level is low.

Based on the foregoing solution, the terminal device may send the second information to the network device, so that the network device can send, to the terminal device based on the first association relationship, the first index indicating the first parameter group, thereby improving signal transmission efficiency.

With reference to the second aspect, in some implementations of the second aspect, the sampling frequency is 15 kHz × 2*^{C}*, where C is a positive integer.

By way of example, and not limitation, C may be 17, 18, 19, 20, 21, or the like. That is, Fₛ may be 3932.16 MHz, 1966.08 MHz, 983.04 MHz, 491.52 MHz, or the like.

Based on the foregoing solution, a plurality of sampling frequencies may be defined in the first association relationship to adapt to different transmission scenarios, thereby improving flexibility of performing signal transmission by the terminal device and the network device based on the first parameter group.

With reference to the second aspect, in some implementations of the second aspect, a modulation scheme corresponding to at least one of the plurality of parameter groups is quadrature amplitude modulation or offset quadrature amplitude modulation, and the sampling frequency is 3932.16 MHz.

It may be understood that a specific form in which the first association relationship indicates the modulation scheme corresponding to the at least one parameter group is not limited in embodiments of this application. For a specific form of the modulation scheme, refer to related descriptions in the first aspect. Details are not described herein again.

With reference to the second aspect, in some implementations of the second aspect, the modulation scheme corresponding to the at least one of the plurality of parameter groups is quadrature amplitude modulation, and the symbol rate is one of 983.04 MHz, 1310.7 MHz, 1966.08 MHz, 2621.4 MHz, or 2949.12 MHz.

With reference to the second aspect, in some implementations of the second aspect, the modulation scheme corresponding to the at least one of the plurality of parameter groups is offset quadrature amplitude modulation, and the symbol rate is one of 1966.08 MHz, 2621.44 MHz, 3932.16 MHz, 5242.8 MHz, or 5898.24 MHz.

With reference to the second aspect, in some implementations of the second aspect, the at least one of the plurality of parameter groups further includes an oversampling factor, and the symbol rate and the oversampling factor meet at least one of the following: the symbol rate is 983.04 MHz, and the oversampling factor is 4/1; the symbol rate is 1966.08 MHz, and the oversampling factor is 2/1; the symbol rate is 1310.7 MHz, and the oversampling factor is 3/1; the symbol rate is 2621.44 MHz, and the oversampling factor is 3/2; the symbol rate is 3932.16 MHz, and the oversampling factor is 1/1; the symbol rate is 5242.8 MHz, and the oversampling factor is 3/4; the symbol rate is 2949.12 MHz, and the oversampling factor is 4/3; or the symbol rate is 5898.24 MHz, and the oversampling factor is 2/3.

With reference to the second aspect, in some implementations of the second aspect, the at least one of the plurality of parameter groups further includes a roll-off factor, and the roll-off factor and the symbol rate meet one of the following: the symbol rate is 983.04 MHz or 1966.08 MHz, and the roll-off factor is 3; the symbol rate is 983.04 MHz or 1966.08 MHz, and the roll-off factor is 2; the symbol rate is 983.04 MHz or 1966.08 MHz, and the roll-off factor is 1; the symbol rate is 983.04 MHz or 1966.08 MHz, and the roll-off factor is 0.5; the symbol rate is 1310.7 MHz or 2621.44 MHz, and the roll-off factor is 2; the symbol rate is 1310.7 MHz or 2621.44 MHz, and the roll-off factor is 1.25; the symbol rate is 1310.7 MHz or 2621.44 MHz, and the roll-off factor is 0.5; the symbol rate is 1966.08 MHz or 3932.16 MHz, and the roll-off factor is 1; the symbol rate is 1966.08 MHz or 3932.16 MHz, and the roll-off factor is 0.5; the symbol rate is 1966.08 MHz or 3932.16 MHz, and the roll-off factor is 0.25; the symbol rate is 2621.4 MHz or 5242.8 MHz, and the roll-off factor is 0.5; the symbol rate is 2621.4 MHz or 5242.8 MHz, and the roll-off factor is 0.125; the symbol rate is 2949.12 MHz or 5898.24 MHz, and the roll-off factor is 0.33; or the symbol rate is 2949.12 MHz or 5898.24 MHz, and the roll-off factor is 0.125.

With reference to the second aspect, in some implementations of the second aspect, at least one of the plurality of parameter groups further includes a first bandwidth, the first bandwidth is used to transmit the first signal, and the symbol rate and the first bandwidth meet at least one of the following: the symbol rate is 983.04 MHz or 1966.08 MHz, and the first bandwidth is 4 GHz; the symbol rate is 983.04 MHz or 1966.08 MHz, and the first bandwidth is 3 GHz; the symbol rate is 983.04 MHz or 1966.08 MHz, and the first bandwidth is 2 GHz; the symbol rate is 983.04 MHz or 1966.08 MHz, and the first bandwidth is 1.5 GHz; the symbol rate is 1310.7 MHz or 2621.44 MHz, and the first bandwidth is 4 GHz; the symbol rate is 1310.7 MHz or 2621.44 MHz, and the first bandwidth is 3 GHz; the symbol rate is 1310.7 MHz or 2621.44 MHz, and the first bandwidth is 2 GHz; the symbol rate is 1966.08 MHz or 3932.16 MHz, and the first bandwidth is 4 GHz; the symbol rate is 1966.08 MHz or 3932.16 MHz, and the first bandwidth is 3 GHz; the symbol rate is 1966.08 MHz or 3932.16 MHz, and the first bandwidth is 2.5 GHz; the symbol rate is 2621.4 MHz or 5242.8 MHz, and the first bandwidth is 4 GHz; the symbol rate is 2621.4 MHz or 5242.8 MHz, and the first bandwidth is 3 GHz; the symbol rate is 2949.12 MHz or 5898.24 MHz, and the first bandwidth is 4 GHz; or the symbol rate is 2949.12 MHz or 5898.24 MHz, and the first bandwidth is 3.4 GHz.

It may be understood that the first bandwidth may be understood as all bandwidths allocated by the network device to the terminal device for transmitting the first signal.

With reference to the second aspect, in some implementations of the second aspect, the at least one of the plurality of parameter groups further includes a first coefficient, and the first coefficient is a quantity of signals in each single-carrier symbol in the first signal.

It may be understood that the quantity of signals in the single symbol may be understood as a quantity of DFT points, or may be understood as a data length in the single symbol.

With reference to the second aspect, in some implementations of the second aspect, the first coefficient meets one of the following: the modulation scheme of the first signal is quadrature amplitude modulation, and the first coefficient is 256; or the modulation scheme of the first signal is offset quadrature amplitude modulation, and the first coefficient is 512.

With reference to the second aspect, in some implementations of the second aspect, the first association relationship is predefined in a protocol.

According to a third aspect, a signal transmission apparatus is provided. The signal transmission apparatus includes: a transceiver unit, configured to receive first information, where the first information indicates a first index corresponding to a first signal, the first signal is carried on a single carrier for transmission, the first index indicates a first parameter group in a first association relationship, the first association relationship includes a plurality of indexes and a plurality of parameter groups respectively corresponding to the plurality of indexes, the first parameter group is a parameter group associated with the first index, the parameter group includes a sampling frequency and/or a symbol rate, the sampling frequency is equal to a sampling frequency corresponding to one subcarrier spacing of the multi-carrier waveform, and a symbol period determined based on the symbol rate is equal to a symbol period of one subcarrier spacing of the multi-carrier waveform; and a processing unit, configured to transmit the first signal based on the first parameter group.

The transceiver unit may perform receiving and sending in the first aspect, and the processing unit may perform processing other than receiving and sending in the first aspect.

According to a fourth aspect, a signal transmission apparatus is provided. The signal transmission apparatus includes: a transceiver unit, configured to send first information, where the first information indicates a first index corresponding to a first signal, the first signal is carried on a single carrier for transmission, the first index indicates a first parameter group in a first association relationship, the first association relationship includes a plurality of indexes and a plurality of parameter groups respectively corresponding to the plurality of indexes, the first parameter group is a parameter group associated with the first index, the parameter group includes a sampling frequency and/or a symbol rate, the sampling frequency is equal to a sampling frequency corresponding to one subcarrier spacing of the multi-carrier waveform, and a symbol period determined based on the symbol rate is equal to a symbol period of one subcarrier spacing of the multi-carrier waveform; and a processing unit, configured to transmit the first signal based on the first parameter group.

The transceiver unit may perform receiving and sending in the second aspect, and the processing unit may perform processing other than receiving and sending in the second aspect.

According to a fifth aspect, a signal transmission apparatus is provided. The signal transmission apparatus includes a transceiver, a processor, and a memory. The processor is configured to control the transceiver to receive and send a signal. The memory is configured to store a computer program. The processor is configured to invoke the computer program from the memory and run the computer program, so that the signal transmission apparatus performs the method according to any one of the possible implementations of the first aspect to the third aspect.

Optionally, there are one or more processors, and there are one or more memories.

Optionally, the memory and the processor may be integrated together, or the memory and the processor may be separately disposed.

Optionally, the communication apparatus further includes a transmitter (transmitter) and a receiver (receiver).

According to a sixth aspect, a signal transmission system is provided. The signal transmission system includes a terminal device and a network device. The terminal device is configured to perform the method in any one of the first aspect or the possible implementations of the first aspect, and the network device is configured to perform the method in any one of the second aspect or the possible implementations of the second aspect.

According to a seventh aspect, a computer program is provided. When the computer program is run, the method in any one of the first aspect and the second aspect or the possible implementations of the first aspect and the second aspect is performed.

According to an eighth aspect, a computer-readable storage medium is provided. The computer-readable storage medium stores a computer program or code. When the computer program or code is run, the method in any one of the first aspect and the second aspect or the possible implementations of the first aspect and the second aspect is performed.

According to a ninth aspect, a chip is provided. The chip includes at least one processor, the at least one processor is coupled to a memory, the memory is configured to store a computer program, and the processor is configured to invoke the computer program from the memory and run the computer program, so that a communication apparatus on which the chip system is installed performs the method according to any one of the first aspect and the second aspect or the possible implementations of the first aspect and the second aspect.

The chip may include an input circuit or interface configured to send information or data and an output circuit or interface configured to receive information or data.

According to a tenth aspect, a computer program product is provided. The computer program product includes computer program code. When the computer program code is run, the method according to any one of the first aspect and the second aspect or the possible implementations of the first aspect and the second aspect is performed.

According to an eleventh aspect, a signal transmission method is provided. The method includes: A terminal device performs the method in any one of the first aspect or the possible implementations of the first aspect, and a network device performs the method in any one of the second aspect or the possible implementations of the second aspect.

It may be understood that descriptions of supplements, explanations, and beneficial effect of the first aspect are also applicable to the second aspect to the eleventh aspect. For brevity, details are not described again.

### BRIEF DESCRIPTION OF DRAWINGS

FIG. 1 is a diagram of constellation points and a bit mapping rule;
FIG. 2 is a diagram of a processing procedure of a DFT-s-OFDM technology;
FIG. 3 is a diagram of a processing procedure of an SC-QAM technology;
FIG. 4 is a diagram of a processing procedure of an SC-FDE technology;
FIG. 5 is a diagram of a symbol format of a single carrier;
FIG. 6 is a diagram of a system architecture to which an embodiment of this application is applied;
FIG. 7 is a diagram of a signal transmission method 700 according to an embodiment of this application;
FIG. 8 is a diagram of a processing procedure of an SC-QAM technology according to an embodiment of this application;
FIG. 9 is a diagram of a multi-carrier waveform receiving procedure according to an embodiment of this application;
FIG. 10 is a block diagram of a communication apparatus 1000 according to an embodiment of this application;
FIG. 11 is a block diagram of a communication apparatus 1100 according to an embodiment of this application;
FIG. 12 is a block diagram of a communication apparatus 1200 according to an embodiment of this application;
FIG. 13 is a block diagram of a communication apparatus 1300 according to an embodiment of this application; and
FIG. 14 is a block diagram of a communication apparatus 1400 according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, and three application scenarios of a 5th generation (5th generation, 5G) mobile communication system: enhanced mobile broadband (enhanced mobile broadband, eMBB), ultra-reliable and low latency communication (ultra-reliable and low latency communication, URLLC), massive machine type communication (massive machine type communication, mMTC). The technical solutions provided in this application may be further applied to a future communication system, for example, a 6th generation (6th generation, 6G) mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), and internet-of-things (internet-of-things, IoT) communication systems, or other communication systems. The technical solutions provided in embodiments of this application may be further applied to a next-generation microwave scenario, an N R-based microwave scenario, a backhaul (integrated access and backhaul, IAB) scenario, or the like.

A network device in embodiments of this application may be any device having a wireless transceiver function. For example, the network device may be an evolved NodeB (evolved Node base station, NodeB, eNB, or e-NodeB) in LTE, a base station (next-generation Node base station, gNodeB, or gNB) or a transmission reception point (transmission receiving point/transmission reception point, TRP) in NR, a base station subsequently evolved from 3GPP, an access node in a Wi-Fi system, a wireless relay node, a wireless backhaul node, or the like. The base station may be a macro base station, a micro base station, a pico base station, a small cell, a relay station, a balloon station, or the like. A plurality of base stations may support networks using a same technology mentioned above, or may support networks using different technologies mentioned above. The base station may include one or more co-site or non-co-site TRPs. The network device may alternatively be a radio controller, a central unit (central unit, CU), and/or a distributed unit (distributed unit, DU) in a cloud radio access network (cloud radio access network, CRAN) scenario. The network device may alternatively be a server, a wearable device, a vehicle-mounted device, or the like. The following uses an example in which the network device is a base station for description. The plurality of network devices may be base stations of a same type, or may be base stations of different types. The base station may communicate with a terminal, or may communicate with a terminal via a relay station. In embodiments of this application, an apparatus configured to implement a function of the network device may be a network device, or may be an apparatus that can support the network device in implementing the function, for example, a chip system. The apparatus may be installed in the network device.

In embodiments of this application, a terminal device is a device having a wireless transceiver function, and may be deployed on land, including an indoor device or an outdoor device, a handheld device, a wearable device, or a vehicle-mounted device, may be deployed on water (for example, on a ship), or may be deployed in the air (for example, on an airplane, a balloon, or a satellite). The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. An application scenario is not limited in embodiments of this application. The terminal device sometimes may also be referred to as a terminal, user equipment (user equipment, UE), an access terminal device, a vehicle-mounted terminal, an industrial control terminal, a UE unit, a UE station, a mobile station, a mobile console, a remote station, a remote terminal device, a mobile device, a UE agent, a UE apparatus, or the like. The terminal device may be fixed or mobile. In embodiments of this application, an apparatus configured to implement a function of the terminal may be a terminal; or may be an apparatus that can support the terminal in implementing the function, for example, a chip system. The apparatus may be installed in the terminal. In embodiments of this application, the chip system may include a chip, or may include a chip and another discrete component.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

To facilitate understanding of embodiments of this application, terms in embodiments of this application are briefly described.

### (1) Peak-to-average power ratio (peak-to-average power ratio, PAPR)

A wireless signal, observed in the time domain, is a sine wave with a constantly changing amplitude, and the amplitude is not constant. An amplitude peak of the signal in one period is different from that in another period. Therefore, the average power and the peak power vary from period to period. The peak power is maximum transient power that occurs with a probability over a long period of time, and the probability is usually 0.01% (that is, 10^-4). A ratio of the peak power under this probability to total average power of a system is a PAPR.

A signal of a wireless communication system needs to be amplified in power before being sent far away. Due to a limitation of technology and equipment costs, a power amplifier usually performs linear amplification only within a range. If the range is exceeded, signal distortion is caused. The signal distortion causes the receive end of a received signal to fail to correctly parse the signal. To ensure that a peak value of the signal is still within a linear range in which the power amplifier can normally perform power amplification, average power of a sent signal needs to be reduced. This manner leads to low efficiency of the power amplifier, or it is equivalent to a decrease in coverage area.

### (2) Modulation

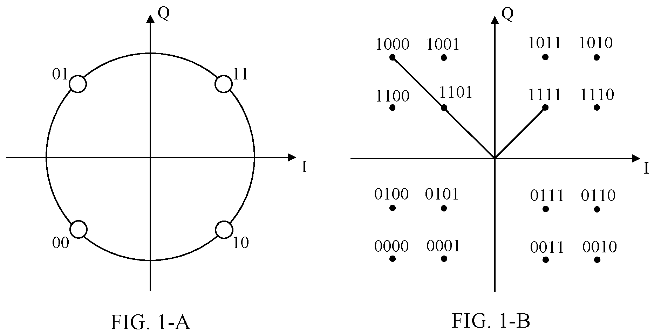

In a communication system, information that needs to be transmitted is usually represented by "0" and "1" bits. Because a signal is usually an analog signal with a frequency, an amplitude, and a phase, the information may be carried on the signal through modulation. QAM and OQAM are two different constellation point mapping manners. As shown in FIG. 1-A, one point (which may also be described as one symbol) in the figure may correspond to two information bits. That is, there are 2^2=4 symbols in quadrature phase shift keying (quadrature phase shift keying, QPSK), and each symbol has its own amplitude and phase. It should be noted that, in the QPSK, the amplitude of the symbols is constant, and a phase difference between symbols is π/2. As shown in FIG. 1-B, one point (which may also be described as one symbol) in the figure may correspond to four information bits. That is, there are 2^4=16 symbols in 16QAM, and each symbol has its own amplitude and phase. In the 16QAM, there may be a plurality of amplitudes, and phases of symbols are different from each other.

In comparison, a difference between the OQAM and the QAM is that the OQAM maps, for example, only a real signal (that is, a horizontal axis part of QAM constellation points) at an odd-numbered position, and maps, for example, only an imaginary signal (that is, a vertical axis part of the QAM constellation points) at an even-numbered position. It may be considered that an OQAM signal splits a QAM signal into two signals for transmission. In this transmission manner, adjacent sent signals are partially orthogonal (one is in a real part, and the other is in an imaginary part). This manner can bring low PAPR.

### (3) Multi-carrier waveform

An orthogonal frequency division multiplexing (Orthogonal Frequency Division Multiplexing, OFDM) technology is a widely used waveform in various communication systems (for example, LTE and NR). The OFDM waveform can convert a high-speed data stream into a plurality of parallel low-speed data streams through serial/parallel conversion, and then allocate the data streams to sub-channels of several subcarriers at different frequencies for transmission. In this way, the OFDM technology greatly improves spectrum utilization. However, the OFDM has a high peak-to-average power ratio. An output of a multi-carrier system is the superposition of a plurality of sub-channel signals. Therefore, if phases of the plurality of signals are consistent, instantaneous power of a superposed signal is much higher than average power of the signals. As a result, a PAPR is high, which imposes a high requirement on linearity of an amplifier in a transmitter machine. Consequently, signal distortion may be caused, causing a spectrum of the signal to change. As a result, orthogonality between sub-channels is damaged, and interference is generated, causing system performance to deteriorate.

A discrete Fourier transform spread orthogonal frequency division multiplexing (discrete Fourier transform spread orthogonal frequency division multiplexing, DFT-S-OFDM)-based waveform uses an OFDM transmitter structure, and precoding is performed before subcarrier mapping of data is performed. Through precoding, the PAPR can be reduced. Compared with the OFDM waveform, the DFT-s-OFDM waveform can provide higher output power and higher power amplification efficiency under the same power amplifier, so that coverage can be increased, and energy consumption can be reduced. The DFT-s-OFDM waveform has a property similar to that of a single-carrier. Advantages of single-carrier waveforms in terms of coverage and power consumption are particularly prominent on the terminal device side. Therefore, in existing versions of LTE and NR, the single-carrier waveforms are all used for uplink transmission.

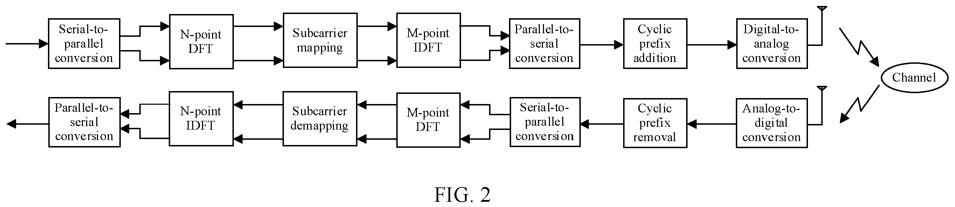

In the DFT-s-OFDM technology, there is additional discrete Fourier transform (discrete Fourier transform, DFT) processing before an OFDM processing process. Therefore, the DFT-s-OFDM technology may also be referred to as a linear precoding OFDM technology. FIG. 2 is a diagram of a processing procedure of the DFT-s-OFDM technology according to an embodiment of this application. As shown in FIG. 2, the transmit end sequentially performs serial-to-parallel (serial-to-parallel) conversion, N-point discrete Fourier transform (discrete Fourier transform, DFT), subcarrier mapping, M-point inverse discrete Fourier transform (inverse discrete Fourier transform, IDFT), parallel-to-serial (parallel-to-serial) conversion, cyclic prefix (cyclic prefix, CP) addition, and digital-to-analog conversion (digital-to-analog conversion, DAC) processing on a time-domain discrete sequence, and then sends a signal through an antenna port and a channel (channel). When receiving the signal through the channel and the antenna port, the receive end sequentially performs analog-to-digital conversion (analog-to-digital conversion, ADC), cyclic prefix removal, serial-to-parallel (serial-to-parallel) conversion, M-point DFT, subcarrier demapping, N-point IDFT, and parallel-to-serial (parallel-to-serial) conversion on the signal, to obtain the time-domain discrete sequence.

The transmit end may obtain a frequency-domain sequence of the time-domain discrete sequence through N-point DFT. After subcarrier mapping is performed on the frequency domain sequence, IDFT is input for M-point IDFT, where N<M. Because a length of the IDFT is greater than a length of the DFT, an extra part of the IDFT is filled with zeros during input. After IDFT, symbol interference may be avoided through cyclic prefix addition.

Currently, in an LTE system and an NR communication system, the DFT-s-OFDM waveform may be used in uplink transmission. However, in high-frequency communication, due to limited component capabilities, power consumption and linearity indicators of the power amplifier are worse. A frequency band for high frequency communication may be 24250 MHz to 52600 MHz in the NR system, may be a frequency band higher than 52600 MHz supported by a subsequently evolved NR system, or may be a higher frequency band of a next generation communication system, for example, a terahertz (THz) frequency band. Particularly, for a higher frequency band (higher than 52.6 GHz), power consumption and linearity indicators of the power amplifier are worse. Because the OFDM waveform has a disadvantage of a high PAPR, the power amplifier cannot operate in a linear range. Therefore, there is a large OFDM performance loss in this frequency band. The DFT-s-OFDM has an advantage of a low PAPR. However, in the higher frequency band, there is a large bandwidth, for example, 2G continuous spectrum. This causes a large fast Fourier transform (Fast Fourier transform, FFT) size (size), leading to high implementation complexity.

### (4) Single-carrier waveform

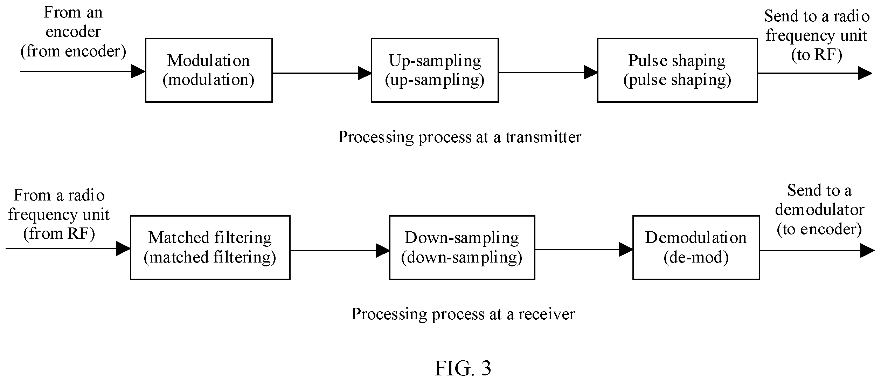

A single-carrier quadrature amplitude modulation (Single-carrier Quadrature Amplitude Modulation, SC-QAM) waveform is a commonly used single-carrier waveform, and is widely used in communication systems such as a 2nd generation (2nd generation, 2G) mobile communication system and a Wi-Fi system. FIG. 3 is a diagram of a processing procedure of the SC-QAM technology. As shown in FIG. 3, the transmit end sequentially performs modulation (modulation), up-sampling (up-sampling), and pulse shaping (pulse shaping) processing on a signal encoded by an encoder (encoder), and finally sends a processed signal through a radio frequency component and an antenna port. The receive end receives the signal from the transmit end through the antenna port and the radio frequency component, sequentially performs matched filtering (matched filtering), down-sampling (down-sampling), and demodulation (demodulation) processing on the received signal, and inputs a processed signal to a decoder for decoding.

It may be learned from the foregoing descriptions that both sending and receiving processes in the SC-QAM technology are completed in time domain, involve time domain matched filtering and up-sampling/down-sampling, and do not involve time domain-frequency domain transform, that is, do not involve DFT, fast Fourier transform (fast Fourier transform, FFT), IDFT, or inverse fast discrete Fourier transform (inverse fast Fourier transform, IFFT) process. Therefore, compared with a multi-carrier waveform, the SC-QAM waveform has advantages of low complexity and a low PAPR.

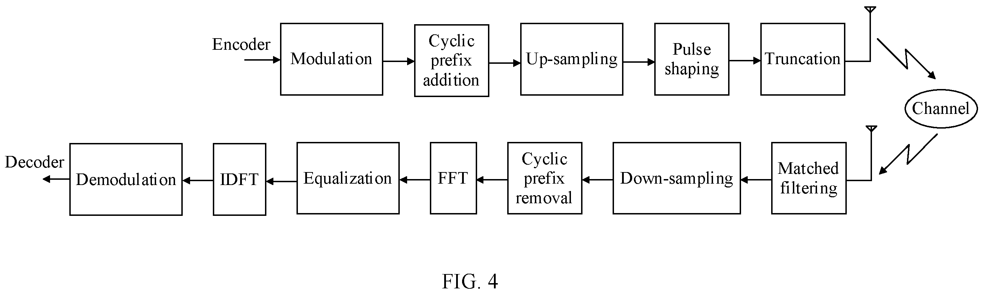

To obtain a diversity gain of the single carrier at frequency, resist performance deterioration caused by multipath interference, or improve time-domain equalization complexity, a single-carrier frequency domain equalization (Single Carrier Frequency Domain Equalization, SC-FDE) technology is provided based on the SC-QAM technology. FIG. 4 is a diagram of a processing procedure of the SC-FDE technology. As shown in FIG. 4, the transmit end sequentially performs modulation, cyclic prefix (cyclic prefix, CP) addition, up-sampling, pulse shaping, and truncation processing on a signal encoded by an encoder, and finally sends a processed signal through a radio frequency component and an antenna port. The receive end receives the signal from the transmit end through the antenna port and the radio frequency component, sequentially performs matched filtering, down-sampling, cyclic prefix removal, FFT, equalization (equalization), IDFT, and demodulation processing on the received signal, and inputs a processed signal to a decoder for decoding.

In FIG. 4, the transmit end may combat multipath interference through cyclic prefix addition processing. The receive end performs FFT processing on the received signal, so that a time domain signal is converted into a frequency domain signal. After channel estimation and equalization processing are performed on the frequency domain signal to eliminate channel impact, the frequency domain signal is converted into the time domain signal through IDFT processing, to obtain a constellation symbol. The SC-FDE technology enables a single-carrier system to have a capability of processing a plurality of pieces of data simultaneously, and can overcome impact of a multipath channel on system performance.

Currently, when a communication device is capable of both receiving and sending multi-carrier and single-carrier waveforms, the multi-carrier waveform corresponds to one transceiver machine, and the single-carrier waveform corresponds to one transceiver machine. The two transceiver machines have different parameters. For example, the transmit end sends a signal in the multi-carrier waveform. In this case, when determining that the received signal is the signal in the multi-carrier waveform, the receive end performs receiving processing on the signal in the multi-carrier waveform using a parameter corresponding to the multi-carrier transceiver machine. Alternatively, the transmit end sends a signal in the single-carrier waveform. In this case, when determining that the received signal is the signal in the single-carrier waveform, the receive end performs receiving processing on the signal in the single-carrier waveform using a parameter corresponding to the single-carrier transceiver machine. For example, in the institute of electrical and electronics engineers (institute of electrical and electronics engineers, IEEE) 802.11ad protocol or the IEEE 802.11ay protocol, the SC-QAM waveform and the OFDM waveform may be compatible. The following Table 1 shows system parameters used in the IEEE 802.11ad or the IEEE 802.11ay protocol.

**Table 1 System parameters corresponding to the OFDM waveform and the SC waveform**

| | |
|---|---|
| OFDM sampling rate (Fₛ) | 2640 MHz |
| SC chip rate (F_{c}) | 1760 MHz |
| OFDM sampling time (Tₛ) | 0.38 ns |
| SC chip time (T_{c}) | 0.57 ns |
| OFDM IDFT/DFT period (T_{DFT}) | 0.194 µs |
| Guard interval duration (T_{GI}) | 48.4 ns |

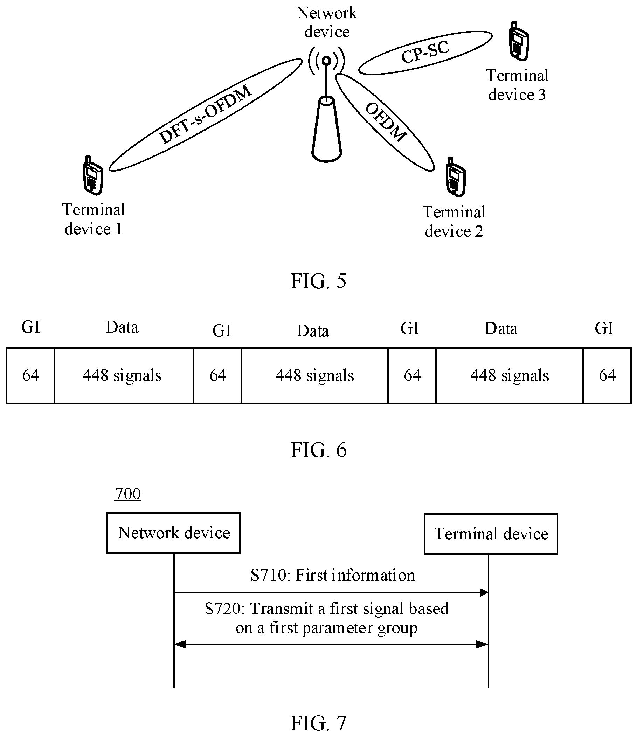

A symbol period of an OFDM symbol (including a cyclic prefix) is 0.242 microseconds (µs). FIG. 5 shows a symbol format used by a single carrier. As shown in FIG. 5, a symbol period of the single-carrier symbol is T_{SC}=(64+448)*T_{c}=0.292 µs. It can be learned that, according to this protocol, parameters are separately designed for the OFDM symbol and the single-carrier symbol. Therefore, symbol periods of the OFDM symbol and the single-carrier symbol are inconsistent. In other words, in a current standard in which the two waveforms are compatible, alignment of a single-carrier symbol with a multi-carrier symbol is not considered. As a result, the system needs to separately design receiver machine parameters for the two waveforms to receive corresponding signals, leading to both high complexity and high costs.

In view of this, embodiments of this application provide a signal transmission method and apparatus. When a communication device is capable of both receiving and sending multi-carrier and single-carrier waveforms, a specific parameter group is configured for the single-carrier waveform, so that the communication device can receive and send a single-carrier signal and a multi-carrier signal based on the same set of parameters, thereby reducing implementation complexity and costs.

It may be understood that the signal transmission method provided in embodiments of this application may be performed by a terminal device, and the signal transmission apparatus provided in embodiments of this application may be the terminal device. Unless otherwise specified, the terminal device in this application may be the terminal device itself, may be a component (for example, a processor, a chip, or a chip system) in the terminal device, or may be a logic module or software that can implement all or part of functions of the terminal device. This is not specifically limited herein in this application. The following uses an example in which the method is performed by the terminal device for description.

It may be understood that the signal transmission method provided in embodiments of this application may be performed by a network device, and the signal transmission apparatus provided in embodiments of this application may be the network device. Unless otherwise specified, the network device in this application may be the network device itself, may be a component (for example, a processor, a chip, or a chip system) in the network device, or may be a logic module or software that can implement all or part of functions of the network device. This is not specifically limited herein in this application. The following uses an example in which the method is performed by the network device for description.

FIG. 6 is a diagram of a system architecture to which an embodiment of this application is applied. The system architecture shown in FIG. 6 includes one network device and three terminal devices. A DFT-s-OFDM waveform is used between a terminal device 1 and the network device, an OFDM waveform is used between a terminal device 2 and the network device, and a CP-SC (for example, CP-SC-QAM) waveform is used between a terminal device 3 and the network device. The terminal device 1, the terminal device 2, and the terminal device 3 are not limited to using one waveform to communicate with the network device. For example, in addition to using the DFT-s-OFDM waveform, the terminal device 1 and the network device may also use an SC-QAM waveform.

It may be understood that this embodiment of this application may be applied to a wireless communication system in which a multi-carrier waveform and a single-carrier waveform coexist. The wireless communication system may include but is not limited to a long term evolution (long term evolution, LTE) system, an NR system, a future communication system, and the like. The future communication system may be, for example, a future network or a 6th generation communication system.

It should be noted that a quantity of devices, forms of the devices, and three waveforms shown in FIG. 6 are used as examples, and do not constitute a limitation on this embodiment of this application. For example, during an actual application, two or more network devices may be included.

For ease of understanding of embodiments of this application, the following descriptions are provided.

First, in this application, unless otherwise stated or if there is a logic conflict, terms and/or descriptions in different embodiments are consistent and may be mutually referenced, and technical features in different embodiments may be combined into a new embodiment based on an internal logical relationship thereof.

Second, in this application, "at least one" means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. In text descriptions of this application, the character "/" generally indicates an "or" relationship between associated objects. "At least one of the following items (pieces)" or a similar expression thereof refers to any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.

Third, in this application, "first", "second", and various numerical numbers (for example, #1 and #2) are merely for distinguishing for ease of description, and are not intended to limit the scope of embodiments of this application, for example, are intended to differentiate different messages, but are not intended to describe a specific order or sequence. It may be understood that the objects described in such a way are interchangeable in proper circumstances so that a solution other than embodiments of this application can also be described.

Fourth, in this application, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Fifth, in this application, "indicating" may include direct indicating and indirect indicating. When a piece of indication information is described as indicating A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Sixth, in this application, a "protocol" may be a standard protocol in the communication field, for example, may include a 5G protocol, an NR protocol, and a related protocol used in a future communication system. This is not limited in this application. "Predefinition" may include advance definition, for example, definition in a protocol. "Preconfiguration" may be implemented by pre-storing corresponding code or a corresponding table in a device, or may be implemented in another manner that may indicate related information. A specific implementation thereof is not limited in this application.

Seventh, in this application, "storage" may mean storage in one or more memories. The one or more memories may be separately disposed, or may be integrated into an encoder, a decoder, a processor, or a communication apparatus. Alternatively, a part of the one or more memories may be separately disposed, and a part the one or more memories may be integrated into a decoder, a processor, or a communication apparatus. A type of the memory may be a storage medium in any form. This is not limited in this application.

8. In this application, if there is no logic conflict, "reporting", "feeding back", and "sending" may be interchanged.

FIG. 7 is a diagram of a signal transmission method 700 according to an embodiment of this application. As shown in the figure, the method 700 includes the following step.

S710: A network device sends first information to a terminal device; and correspondingly, the terminal device receives the first information. The first information indicates a first index corresponding to a first signal.

It may be understood that a specific manner in which the network device sends the first information to the terminal device is not limited in embodiments of this application. By way of example, and not limitation, the network device may send the first information to the terminal device based on downlink control information (Downlink Control Information, DCI), radio resource control (Radio Resource Control) information, or a media access control control element (Media Access Control Control Element, MAC CE).

It may be understood that a trigger condition for the network device to send the first information is not limited in embodiments of this application.

In a possible implementation, the network device actively sends the first information to the terminal device. For example, the network device may send the first information to the terminal device after the terminal device accesses the network device.

In another possible implementation, the method 700 further includes the following step.

S705: The terminal device sends second information to the network device; and correspondingly, the network device receives the second information. The second information may be understood as capability information of the terminal device, to indicate whether the terminal device supports transmission of a signal using a single-carrier waveform.

By way of example, and not limitation, the second information indicates that the terminal device supports transmission of the signal in the single-carrier waveform. In other words, the second information indicates that the terminal device is UE of a single-carrier type. For example, the second information indicates that the UE is UE in a single-carrier waveform by using UE_type=SC.

By way of example, and not limitation, the second information is used to request to transmit the signal in the single-carrier waveform. For example, the second information indicates, by using UE_SC_CONFIG=1, that UE requests to transmit the signal in the single-carrier waveform.

It may be understood that a trigger condition for the terminal device to send the second information to the network device is not limited in embodiments of this application. For example, the terminal device may send the second information to the network device when a capability of the terminal device is limited, for example, when a battery level is low.

It is easy to understand that, after receiving the second information, the network device may send the first information to the terminal device when it is determined that the terminal device supports transmission of the signal in the single-carrier waveform.

In this embodiment of this application, the first index indicates a first parameter group in a first association relationship. The first association relationship may include a plurality of indexes and a plurality of parameter groups respectively corresponding to the plurality of indexes. The plurality of indexes are in one-to-one correspondence with the plurality of parameter groups, and the first parameter group is a parameter group corresponding to the first index. It may be understood that the plurality of parameter groups may support the terminal device in using the same set of parameters to receive and send signals using a single-carrier waveform and a multi-carrier waveform.

Each parameter group includes a sampling frequency and/or a symbol rate. The sampling frequency is equal to a sampling frequency corresponding to one subcarrier spacing of a multi-carrier waveform, and a symbol period determined based on the symbol rate is equal to a symbol period of one subcarrier spacing of the multi-carrier waveform. In other words, under a same subcarrier spacing (for example, 15 kHz), the sampling frequency in the parameter group is equal to a sampling frequency corresponding to the multi-carrier waveform, and the symbol period determined based on the symbol rate is equal to a symbol period of the multi-carrier waveform.

It may be understood that the first association relationship is known to both the network device and the terminal device. For example, the first association relationship may be preconfigured by the network device and the terminal device before delivery, or the first association relationship may be predefined in a protocol. The following uses an example in which the first association relationship is predefined in the protocol for description. The first association relationship may be an independent set predefined in the protocol, or may be a subset in a set that is predefined in the protocol.

It may be understood that a specific representation of the first association relationship is not limited in embodiments of this application. For example, the first association relationship may be represented in a form of a table. Table 2 is a transmission configuration information table according to an embodiment of this application.

It may be understood that a table in an actual application may be all or some entries in Table 2. This is not limited in embodiments of this application.

**Table 2 Transmission configuration information table**

| Configuration index | Sampling frequency Fₛ | Symbol rate F_{c} |
|---|---|---|
| | (MHz) | (MHz) |
| 0 | | 983.04 |
| 1 | | 1310.7 |
| 2 | | 1966.08 |
| 3 | 3932.16 | 2621.44 |
| 5 | | 2949.12 |
| 6 | | 3932.16 |
| 7 | | 5242.8 |
| 8 | | 5898.24 |

The first association relationship may alternatively be represented in a form shown in Table 2b. It may be understood that a table in an actual application may be all or some entries in Table 2b. This is not limited in embodiments of this application.

**Table 2b Transmission configuration information table**

| Configuration index | Symbol rate F_{c} |
|---|---|
| | (MHz) |
| 0 | 983.04 |
| 1 | 1310.7 |
| 2 | 1966.08 |
| 3 | 2621.44 |
| 5 | 2949.12 |
| 6 | 3932.16 |
| 7 | 5242.8 |
| 8 | 5898.24 |

It may be understood that an NR system may support a plurality of subcarrier spacings (subcarrier spacing, SCS), and a specific subcarrier spacing used in the system is known to both the network device and the terminal device. In Table 2, a subcarrier spacing of 15 kHz is used as an example, and this does not constitute a limitation on embodiments of this application. For example, the subcarrier spacing may alternatively be 30 kHz.

It may be understood that configuration indexes in Table 2 are numbered starting from "0" in ascending order of symbol rates. The foregoing numbering is merely used as an example. For example, the configuration indexes may alternatively be numbered starting from "1". This is not limited in embodiments of this application. Table 2 shows a parameter group corresponding to each of the eight configuration indexes. The parameter group may include at least one of the sampling frequency or the symbol rate.

It may be understood that a specific form in which the sampling frequency or the symbol rate is indicated in the parameter group is not limited in embodiments of this application.

By way of example, and not limitation, the parameter group may explicitly indicate the sampling frequency and the symbol rate, so that the terminal device may determine a symbol period in the first signal based on the first parameter group, and the symbol period in the first signal is aligned with a symbol period of a multi-carrier symbol, thereby implementing multiplexing of the single-carrier waveform and the multi-carrier waveform.

By way of example, and not limitation, the parameter group may explicitly indicate either of the sampling frequency or the symbol rate. For example, the parameter group may indicate the sampling frequency in a form of a sampling frequency (an oversampling factor) or a sampling frequency (1/oversampling factor), where the oversampling factor is a ratio of the sampling frequency to the symbol rate. Therefore, when the sampling frequency is known, the terminal device may obtain a corresponding symbol rate through calculation. It is easy to understand that, when the parameter group indicates the symbol rate in a form of a symbol rate (an oversampling factor) or a symbol rate (1/oversampling factor), the terminal device may determine a corresponding sampling frequency. Based on the sampling frequency and the symbol rate, the terminal device may determine the symbol period in the first signal based on the first parameter group, and the symbol period in the first signal is aligned with the symbol period of the multi-carrier symbol, thereby implementing multiplexing of the single-carrier waveform and the multi-carrier waveform.

The sampling frequency Fₛ in the transmission configuration parameter table provided in this embodiment of this application meets *F_{S}* = 15 *kHz* × 2*^{C}*, where C is a positive integer. For example, C may be 17, 18, 19, 20, 21, or the like. That is, Fₛ may be 3932.16 MHz, 1966.08 MHz, 983.04 MHz, 491.52 MHz, or the like. For example, in Table 2, when the subcarrier spacing is 15 kHz and C is 17, the sampling frequency is specified as 3932.4 MHz.

The symbol rate in Table 2 represents a rate of transmitting a signal. A relationship between the symbol rate F_{c} and Fₛ in the transmission configuration parameter table provided in this embodiment of this application is: *F_{S}* = *F_{C}* × *M*/*N*, where M is an up-sampling factor, N is a down-sampling factor, and both M and N are positive integers greater than or equal to 1. For example, a value of M may be {2, 3, 4, 5, 6, 7, 8, 9, 10}, and a value of N may be {1, 2, 3, 4, 5, 6, 7, 8}.

When the subcarrier spacings are the same, the sampling frequency provided in Table 2 is equal to a sampling frequency corresponding to the multi-carrier waveform, and the symbol period determined based on the symbol rate provided in Table 2 is equal to a symbol period in the multi-carrier waveform, so that a symbol period of a single-carrier symbol is aligned with the symbol period of the multi-carrier symbol, thereby implementing multiplexing of the single-carrier waveform and the multi-carrier waveform.

Optionally, as shown in Table 3, at least one parameter group in the first association relationship may further include a separate column of an oversampling factor (or 1/oversampling factor). For example, in Table 3, when the sampling frequency is 3932.4 MHz and the oversampling factor is 4/1, the symbol rate is 983.04 MHz.

**Table 3 Transmission configuration information table**

| Configuration index | Sampling frequency Fₛ | Symbol rate F_{c} | Oversampling factor |
|---|---|---|---|
| | (MHz) | (MHz) | |
| 0 | | 983.04 | 4/1 |
| 1 | | 1310.7 | 3/1 |
| 2 | | 1966.08 | 2/1 |
| 3 | 3932.16 | 2621.44 | 3/2 |
| 5 | | 2949.12 | 4/3 |
| 6 | | 3932.16 | 1/1 |
| 7 | | 5242.8 | 3/4 |
| 8 | | 5898.24 | 2/3 |

It may be understood that a single-carrier modulation scheme determined by the terminal device based on the first association relationship is one of QAM or OQAM, and a specific form in which the first association relationship indicates the modulation scheme is not limited in embodiments of this application.

In a possible implementation, in the first association relationship, a quantity of signals in a single symbol may be carried in each parameter group, to indicate the single-carrier modulation scheme. For example, as shown in Table 4, when the quantity of signals in the single symbol carried in the parameter group is 256, it indicates that the single-carrier modulation scheme is QAM; or when the quantity of signals in the single symbol carried in the parameter group is 512, it indicates that the single-carrier modulation scheme is OQAM.

**Table 4 Transmission configuration information table**

| Configuration index | Sampling frequency Fₛ | Symbol rate F_{c} | Quantity of signals in a single symbol |
|---|---|---|---|
| | (MHz) | (MHz) | |
| 0 | | 983.04 | 256 |
| 1 | | 1310.7 | 256 |
| 2 | | 1966.08 | 256 |
| 3 | | 1966.08 | 512 |
| 4 | 3932.16 | 2621.44 | 256 |
| 5 | | 2621.44 | 512 |
| 6 | | 2949.12 | 256 |
| 7 | | 3932.16 | 512 |
| 8 | | 5242.8 | 512 |
| 9 | | 5898.24 | 512 |

It may be understood that the quantity of signals in the single symbol in Table 4 may be understood as a quantity of DFT points, or may be understood as a data length in the single symbol. For example, in Table 4, the quantity of signals in the single symbol may be 256 or 512, or the quantity of signals in the single symbol may be 720 (not shown in Table 4).

Optionally, the parameter group may further include a roll-off factor of a filter configured to transmit the first signal, and a filter coefficient is generated based on the roll-off factor, to determine a filter shape. A specific process is described in detail below, and details are not described herein.

Optionally, the parameter group may further include a first bandwidth used to transmit the first signal. The first bandwidth may be understood as all bandwidths allocated by the network device to the terminal device for transmitting the first signal. It may be understood that the first bandwidth may include a transmission bandwidth and an extended bandwidth, the extended bandwidth is a bandwidth used for spectrum shaping, and spectrum shaping may be equivalent to a frequency domain shape of a time-domain filter in a single-carrier waveform processing procedure.

By way of example, and not limitation, when the network device indicates a modulation scheme based on the quantity of signals in the single symbol in the first association relationship, each parameter group in the first association relationship may be Table 5, or may be a subset of Table 5.

**Table 5 Transmission configuration information table**

| Configuration index | Sampling frequency Fₛ | Symbol rate F_{c} | Oversampling factor | First bandwidth | Roll-off factor | Quantity of signals in a single symbol |
|---|---|---|---|---|---|---|
| | (MHz) | (MHz) | | (GHz) | | |
| 0 | | 983.04 | 4/1 | 4 | 3 | 256 |
| 1 | | | | 3 | 2 | |
| 2 | | | | 2 | 1 | |
| 3 | | | | 1.5 | 0.5 | |
| 4 | | 1966.08 | 2/1 | 4 | 3 | 512 |
| 5 | | | | 3 | 2 | |
| 6 | | | | 2 | 1 | |
| 7 | | | | 1.5 | 0.5 | |
| 8 | | 1310.7 | 3/1 | 4 | 2 | 256 |
| 9 | 3932.16 | | | 3 | 1.25 | |
| 10 | | | | 2 | 0.5 | |
| 11 | | 2621.44 | 3/2 | 4 | 2 | 512 |
| 12 | | | | 3 | 1.25 | |
| 13 | | | | 2 | 0.5 | |
| 14 | | 1966.08 | 2/1 | 4 | 1 | 256 |
| 15 | | | | 3 | 0.5 | |
| 16 | | | | 2.5 | 0.25 | |
| 17 | | 3932.16 | 1/1 | 4 | 1 | 512 |
| 18 | | | | 3 | 0.5 | |
| 19 | | | | 2.5 | 0.25 | |
| 20 | | 2621.44 | 3/2 | 4 | 0.5 | 256 |
| 21 | | | | 3 | 0.125 | |
| 22 | | 5242.8 | 3/4 | 4 | 0.5 | 512 |
| 23 | | | | 3 | 0.125 | |
| 24 | | 2949.12 | 4/3 | 4 | 0.33 | 256 |
| 25 | | | | 3.4 | 0.125 | |
| 26 | | 5898.24 | 2/3 | 4 | 0.33 | 512 |
| 27 | | | | 3.4 | 0.125 | |

In this embodiment of this application, when roll-off factors or first bandwidths in the parameter groups are the same, values of a symbol rate, an oversampling factor, and a quantity of signals in a single symbol in a parameter group corresponding to an OQAM signal are twice values of a symbol rate, an oversampling factor, and a quantity of signals in a single symbol in a parameter group corresponding to a QAM signal.

In another possible implementation, in the first association relationship, a separate bit may be set in each index, to indicate the single-carrier modulation scheme. For example, each index of the first association relationship may include a first bit and a second bit, where the first bit indicates at least one of the sampling frequency and the symbol rate, and the second bit indicates the single-carrier modulation scheme. As shown in Table 6, A indicates that the single-carrier modulation scheme is QAM, and B indicates that the single-carrier modulation scheme is OQAM. When the first index is "0+A", the sampling frequency included in the first parameter group is 3932.16 MHz, the symbol rate is 983.04 MHz, and the modulation scheme is QAM. When the first index is "3+B", the sampling frequency included in the first parameter group is 3932.16 MHz, the symbol rate is 5242.8 MHz, and the modulation scheme is OQAM.

**Table 6 Transmission configuration information table**

| Configuration index | Sampling frequency Fₛ | Symbol rate F_{c} | |
|---|---|---|---|
| | (MHz) | (MHz) | |
| | | A | B |
| 0 | | 983.04 | 1966.08 |
| 1 | | 1310.7 | 1966.08 |
| 2 | 3932.16 | 2621.44 | 3932.16 |
| 3 | | 2621.44 | 5242.8 |
| 4 | | 2949.12 | 5898.24 |

Similarly, in this implementation, each parameter group may further include at least one of the oversampling factor, the roll-off factor, the first bandwidth, and the quantity of signals in the single symbol. By way of example, and not limitation, the first association relationship may be shown in Table 7, and the first association relationship may be Table 7 or a subset of Table 7. This is not limited in embodiments of this application.

**Table 7 Transmission configuration information table**

| Configuration index | Sampling frequency Fₛ (MHz) | Symbol rate F_{c} (MHz) | | Oversampling factor | | First bandwidth (GHz) | Roll-off factor | Quantity of signals in a single symbol | |
|---|---|---|---|---|---|---|---|---|---|
| | | A | B | A | B | | | A | B |
| 0 | 3932.16 | 983.04 | 1966.08 | 4/1 | 2/1 | 4 | 3 | 256 | 512 |
| 1 | | | | | | 3 | 2 | | |
| 2 | | | | | | 2 | 1 | | |
| 3 | | | | | | 1.5 | 0.5 | | |
| 4 | | 1310.7 | 2621.44 | 3/1 | 3/2 | 4 | 2 | | |
| 5 | | | | | | 3 | 1.25 | | |
| 6 | | | | | | 2 | 0.5 | | |
| 7 | | 1966.08 | 3932.16 | 2/1 | 1/1 | 4 | 1 | | |
| 8 | | | | | | 3 | 0.5 | | |
| 9 | | | | | | 2.5 | 0.25 | | |
| 10 | | 2621.4 | 5242.8 | 3/2 | 3/4 | 4 | 0.5 | | |
| 11 | | | | | | 3 | 0.125 | | |
| 12 | | 2949.12 | 5898.24 | 4/3 | 2/3 | 4 | 0.33 | | |
| 13 | | | | | | 3.4 | 0.125 | | |

In still another possible implementation, the network device may add, to the first information, an identifier indicating a modulation scheme of the first signal, so that the terminal device can determine the modulation scheme of the first signal based on the identifier, and determine the corresponding first parameter group in the first association relationship based on the first index. For example, the identifier may indicate, by using a bit "0", that the modulation scheme is QAM, and indicate, by using a bit "1", that the modulation scheme of the single-carrier waveform is "OQAM".

Unless otherwise specified, due to a system design consideration, table information actually used in this embodiment of this application may include only some entry information in the foregoing Table 3 to Table 7. The inclusion relationship is not described in detail in the entries in the following tables.

S720: The terminal device transmits the first signal based on the first parameter group.

Specifically, after receiving the first information, the terminal device may determine the first parameter group based on the first index and the first association relationship.

It may be understood that the first information may indicate one or more indexes. For example, if the first association relationship is shown in Table 7, and the first information may indicate the configuration index "2" in Table 6, the terminal device may determine, based on the first association relationship, to use the parameter group corresponding to the configuration index "2". Alternatively, the first information may indicate "2" and "3" in Table 6. In this case, the terminal device may use, based on the first association relationship, the parameter group corresponding to the configuration index "2" or the parameter group corresponding to "3".

It may be understood that, in this embodiment of this application, uplink transmission or downlink transmission between the terminal device and the network device is not limited.

By way of example, and not limitation, when the terminal device performs uplink transmission with the network device, that the terminal device transmits the first signal based on the first parameter group may be understood as that the terminal device sends the first signal based on the first parameter group.

Specifically, in an uplink transmission process, the terminal device may process an uplink symbol based on the first parameter group by using a single-carrier processing procedure, to obtain an uplink signal. It may be understood that, in this implementation, a waveform of the uplink signal is a single-carrier waveform. This manner is described below.

Correspondingly, the network device may process the uplink signal based on the first parameter group, to obtain the uplink symbol.

Specifically, the network device may process the uplink signal based on a transmission parameter corresponding to the first parameter group by using a multi-carrier waveform processing procedure, to obtain the uplink symbol. Alternatively, the network device may process the uplink signal based on the transmission parameter corresponding to the first parameter group by using a single-carrier waveform processing procedure, to obtain the uplink symbol.

By way of example, and not limitation, when the terminal device performs downlink transmission with the network device, that the terminal device transmits the first signal based on the first parameter group may be understood as that the terminal device processes the received first signal based on the first parameter group.

Specifically, in a downlink transmission process, the network device processes a downlink signal by using the first association relationship, to obtain a downlink symbol. The first information indicates a configuration index (namely, the first index) corresponding to the first parameter group used by the network device. When receiving the first information and the downlink signal, the terminal device may process the downlink signal based on the first parameter group corresponding to the first index, to obtain the downlink symbol. When a waveform of the downlink signal is the single-carrier waveform, the terminal device may process the downlink signal by using the multi-carrier waveform processing procedure; or when a waveform of the downlink signal is the multi-carrier waveform, the terminal device may process the downlink signal by using the single-carrier waveform processing procedure.

Optionally, a transmission status may be defined in this embodiment of this application. In the transmission status, the network device and the terminal device may perform transmission based on the first association relationship. It may be understood that the transmission status is a transmission status defined for a case in which the communication device can simultaneously receive and send a single-carrier waveform and a multi-carrier waveform. To distinguish the transmission status from another transmission status, the transmission status may be referred to as a specific transmission status, a low power consumption transmission status, a single-carrier-multi-carrier transmission status, a multiplex transmission status, or the like.

The transmission status is also defined by the network device, and the network device may configure the transmission status for the terminal device. Alternatively, the transmission status may be preconfigured, that is, the network device and the terminal device may preconfigure the transmission status, for example, configure the transmission status at delivery.

In the transmission status, the single-carrier waveform and the multi-carrier waveform may correspond to a set of transmission parameters, or may be described as corresponding to a set of transceiver mechanism or transceiver machines. In this case, a transmit end sends a signal in the single-carrier waveform (that is, a signal obtained through a single-carrier waveform processing procedure), and by using the transceiver mechanism, the receive end may process the received signal by using a multi-carrier waveform processing procedure. Alternatively, the transmit end sends a signal in the multi-carrier waveform (that is, a signal obtained through a multi-carrier waveform processing procedure), and by using the transceiver mechanism, the receive end may process the received signal by using a single-carrier waveform processing procedure. The transmit end may be the terminal device, and the receive end may be the network device. Alternatively, the transmit end may be the network device, and the receive end may be the terminal device. In the transmission status, a set of transceiver machines do not need to be deployed for each of the single-carrier waveform and the multi-carrier waveform, and only one set of transceiver machines need to be deployed, so that device overheads can be reduced.

Based on the transmission status, before sending the first information, the network device may further send third information to the terminal device, where the third information indicates the terminal device to transmit a signal based on the first association relationship. Specifically, the third information may indicate the terminal device to send an uplink signal based on the first association relationship, or receive a downlink signal based on the first association relationship. It may be understood that the third information indicates to notify the terminal device to transmit a signal based on the first association relationship, that is, notify the terminal device to transmit a signal in the transmission status. The third information may be described as specific transmission status indication information, low power consumption transmission status indication information, single-carrier-multi-carrier transmission status indication information, or the like.

It may be understood that a specific manner in which the network device sends the third information to the terminal device is not limited in embodiments of this application.

By way of example, and not limitation, the network device may send the third information to the terminal device based on DCI, RRC information, or MAC CE information.

By way of example, and not limitation, the network device may send the third information to the terminal device based on information broadcast on a physical broadcast channel (physical broadcast channel, PBCH), that is, the network device broadcasts the third information to a terminal device within coverage of the network device.

Based on the foregoing solution, when the communication device (for example, the terminal device and the network device) is capable of both receiving and sending single-carrier and multi-carrier waveforms, the parameter group corresponding to each configuration index included in the first association relationship may be used to process both the single-carrier waveform and the multi-carrier waveform. Both the single-carrier waveform and the multi-carrier waveform may use the transmission configuration information. In comparison with two sets of parameters, the device can implement signal sending and receiving with low complexity, and avoid device overheads caused by installing two sets of transceiver machines.

The following uses uplink transmission as an example to describe, with reference to the single-carrier waveform processing procedure and the multi-carrier waveform processing procedure, a process of processing an uplink symbol in a manner A to a manner C. In the description process, the single-carrier waveform processing procedure is described by using the processing procedure of the SC-QAM technology as an example.

Manner A: The first association relationship includes a configuration index, and a sampling frequency, a symbol rate, and a roll-off factor that correspond to the configuration index.

Specifically, the first association relationship in Manner A may be represented by using the following Table 8. Table 8 may include 28 configuration indexes. For omitted configuration indexes and corresponding sampling frequencies, symbol rates, and roll-off factors, refer to Table 5. Table 8 may alternatively include some of the 28 configuration indexes and sampling frequencies, symbol rates, and roll-off factors corresponding to these configuration indexes.

**Table 8 Transmission configuration information table**

| Configuration index | Sampling frequency Fₛ | Symbol rate F_{c} | Roll-off factor |
|---|---|---|---|
| | (MHz) | (MHz) | |
| 0 | 3932.16 | 983.04 | 3 |
| 1 | | | 2 |
| 2 | | | 1 |
| 3 | | | 0.5 |
| ... | | | |
| 26 | 3932.16 | 5898.24 | 0.33 |
| 27 | | | 0.125 |

It may be understood that, when receiving the first information, the terminal device finds, from Table 8, a sampling frequency, a symbol rate, and a roll-off factor that correspond to the first information, that is, finds the sampling frequency, the symbol rate, and the roll-off factor that correspond to the first index indicated by the first information. It may be understood that the sampling frequency, the symbol rate, and the roll-off factor that correspond to each configuration index in Table 8 represent an association relationship between the sampling frequency, the symbol rate, and the roll-off factor that correspond to each configuration index. For example, if a sampling frequency, a symbol rate, and a roll-off factor that correspond to a configuration index "0" are respectively 3932.16 MHz, 983.04 MHz, and 3, it indicates that an association relationship between the sampling frequency, the symbol rate, and the roll-off factor that correspond to the configuration index "0" is that the sampling frequency is 3932.16 MHz, the symbol rate is 983.04 MHz, and the roll-off factor is 3. The association relationships enumerated in Table 8 may enable a symbol period of a single-carrier symbol to be aligned with a symbol period of a multi-carrier symbol, to implement multiplexing of the single-carrier waveform and the multi-carrier waveform.

It may be understood that, when the terminal device determines, according to Table 8, the roll-off factor indicated by the first information, the terminal device may generate a filter coefficient according to a predefined filter shaping formula, to determine a filter shape. A root raised cosine (root raised cosine, RRC) filter is used as an example of the filter, and the filter shaping formula of the filter is: $h \left(t\right) = \left\{\begin{matrix}\frac{1}{Ts} ∗ \left[1+β∗\left(\frac{4}{π}-1\right)\right] , t = 0 \\ \frac{β}{Ts ∗ \sqrt{2}} ∗ \left[\left(1+\frac{2}{π}\right)∗sin\left(\frac{π}{4 β}\right)+\left(1-\frac{2}{π}\right)∗cos\left(\frac{π}{4 β}\right)\right] , t = \pm \frac{Ts}{4 β} \\ \frac{1}{Ts} ∗ \frac{sin \left[π∗\frac{t}{Ts}∗\left(1-β\right)\right] + 4 β ∗ \frac{t}{Ts} ∗ cos \left[π∗\frac{t}{Ts}∗\left(1+β\right)\right]}{π ∗ \frac{t}{Ts} ∗ \left[1-{\left(4β∗\frac{t}{Ts}\right)}^{2}\right]} , t = another value\end{matrix}\right.$ Formula (1)

Tₛ represents a symbol rate, that is, F_{c} in the foregoing description. It may be understood that a type of the filter is known to both the network device and the terminal device. In addition, the type of the filter is not limited in embodiments of this application. For example, the filter may be an RRC filter, or the filter may be a square root raised cosine filter, a Kaiser window filter, or the like. It may be understood that, regardless of which type of filter is used, the filter coefficient needs to be generated based on the roll-off factor, to determine the filter shape.

For example, if the first index indicated by the first information is the configuration index "0", the terminal device may obtain, by searching Table 8, that the symbol rate is 983.04 MHz and the roll-off factor is 3, and then substitute the symbol rate and the roll-off factor into the foregoing formula to determine the filter shape.

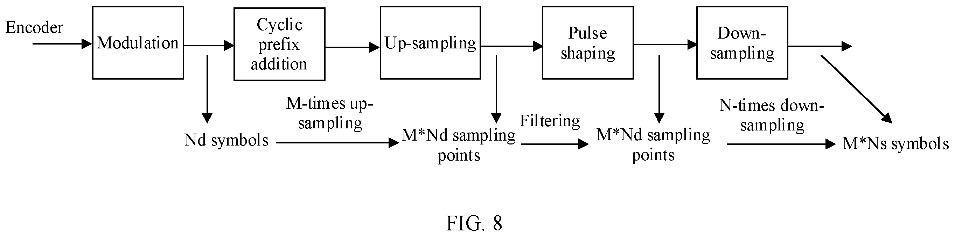

FIG. 8 is a diagram of a processing procedure of an SC-QAM technology according to an embodiment of this application. The following describes, with reference to FIG. 8, a procedure in which the terminal device processes an uplink symbol by using a single-carrier waveform. It may be understood that FIG. 8 shows a sending process, and does not show a receiving process. The receiving process may be understood as an inverse process of the sending process.

It may be understood that the uplink symbol may be obtained through modulation, or may be obtained through modulation and cyclic prefix addition. This is not limited in embodiments of this application.

As shown in FIG. 8, after M times of up-sampling processing is performed on Nd uplink symbols, M*Nd sampling points are obtained, and then pulse shaping processing is performed to obtain M*Nd sampling points. After L times of down-sampling processing is performed, Ns sampling points are obtained. Ns=Nd*M/L, where M and L are positive integers. To avoid high complexity, values of M and L should not be excessively large. If the values are excessively large, both storage and operation complexity are greatly affected. A value of M may be {2, 3, 4, 5, 6, 7, 8, 9, 10}, and a value of L may be {1, 2, 3, 4, 5, 6, 7, 8}. To meet the Nyquist sampling theorem, the up-sampling factor M needs to be greater than or equal to the down-sampling factor L. If L=1, the procedure shown in FIG. 8 does not include down-sampling. If L is greater than 1, the procedure shown in FIG. 8 includes down-sampling.

It may be understood that M/L is an oversampling factor. Therefore, when learning the configuration index "0", the terminal device may calculate, based on a ratio of the known sampling frequency 3932.16 MHz to the known symbol rate 983.04 MHz, that the oversampling factor is 4/1, and determine that the up-sampling factor is 4 and the down-sampling factor is 1. In this way, the terminal device may process the uplink symbol based on the up-sampling factor, the filtering shape, and the down-sampling factor, to obtain the uplink symbol.

It may be understood that, in addition to being represented by using a specific value, the sampling frequency in Table 8 may be represented by using an oversampling factor or 1/oversampling factor, or may be represented by using a specific value+an oversampling factor (or 1/oversampling factor). For example, the sampling frequency corresponding to the configuration index "0" may be represented as 983.04 MHz, or may be represented as 4/1 or 1/4, or may be represented as 983.04 MHz (4/1) or 983.04 MHz (1/4). When the sampling frequency is represented as 4/1 or 1/4, and the sampling frequency is 3932.16 MHz, the symbol rate F_{c} may be obtained through calculation according to Fₛ=F_{c}*M/L, that is, F_{c}=Fₛ*L/M=3932.16*1/4=983.04 MHz.

Effect of pulse shaping in the frequency domain in FIG. 8 may be understood as spectrum shaping. Therefore, pulse shaping may be understood as filtering. During filtering, the filtering shape is determined based on a roll-off factor corresponding to the first index indicated by the first information. It may be understood that, when determining the symbol rate and the roll-off factor based on the configuration index, the terminal device may obtain a bandwidth (that is, the first bandwidth), the transmission bandwidth, and the extended bandwidth that are actually used for signal transmission. For example, if the symbol rate and the roll-off factor corresponding to the configuration index "0" are respectively 983.04 MHz and 3, it may be determined that the extended bandwidth is 983.04*3≈3000 MHz, and it is determined that the first bandwidth is 983.04+3000≈4000 MHz, that is, the first bandwidth is 4 GHz.

Optionally, Table 8 may further include a column of transmission parameters indicating a quantity of signals included in each symbol, that is, the first association relationship further includes an association relationship between a sampling frequency and a quantity of signals included in each symbol.

In this embodiment of this application, a signal obtained through processing in the single-carrier waveform sending processing procedure may be described as a signal sent in the single-carrier waveform, a signal obtained through processing in a low-complexity processing procedure, a signal sent without frequency domain processing, or the like.

It may be understood that a specific procedure in which the network device processes the first signal is not limited in embodiments of this application.

By way of example, and not limitation, after receiving the first signal, the network device may process the first signal through a receiving procedure corresponding to the single-carrier waveform sending procedure shown in FIG. 8.

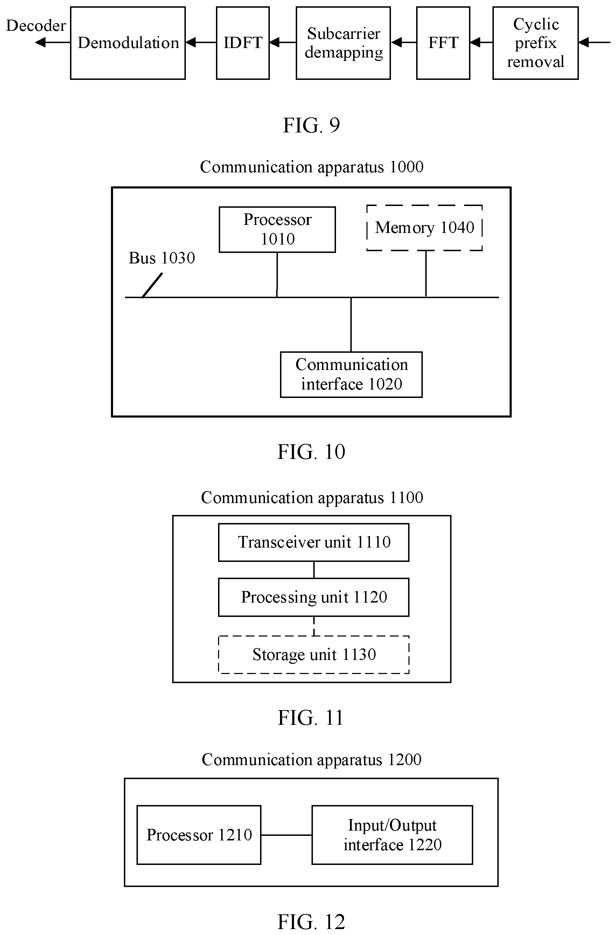

By way of example, and not limitation, after receiving the first signal, the network device may process the first signal through the multi-carrier waveform (for example, DFT-s-OFDM) receiving procedure shown in FIG. 9. As shown in FIG. 9, the multi-carrier waveform receiving procedure may include processes such as cyclic prefix removal, FFT, subcarrier demapping, IDFT, and demodulation.

Based on the foregoing solution, when the terminal device may obtain, by querying Table 8, a symbol rate and a roll-off factor corresponding to a configuration index, the terminal device determines a filtering waveform and sends the single-carrier waveform.

Manner B: The first association relationship includes a configuration index and a sampling frequency, a symbol rate, and a first bandwidth that correspond to the configuration index.

Specifically, the first association relationship in Manner B may be represented by using the following Table 9. Table 9 may include 28 configuration indexes. For omitted configuration indexes and corresponding sampling frequencies, symbol rates, and first bandwidths, refer to Table 5. Table 9 may also include some of the 28 configuration indexes and sampling frequencies, symbol rates, and first bandwidths corresponding to these configuration indexes.

**Table 9 Transmission configuration information table**

| Configuration index | Sampling frequency Fₛ (MHz) | Symbol rate F_{c} (MHz) | First bandwidth (GHz) |
|---|---|---|---|
| 0 | 3932.16 | 983.04 | 4 |
| 1 | | | 3 |
| 2 | | | 2 |
| 3 | | | 1.5 |
| ... | | | |
| 26 | 3932.16 | 5898.24 | 4 |
| 27 | | | 3.4 |

When receiving the first information, the terminal device may search Table 9 for the sampling frequency, the symbol rate, and the first bandwidth that correspond to the first indication information, that is, search for the sampling frequency, the symbol rate, and the first bandwidth that correspond to the indicated configuration index. It may be understood that the sampling frequency, the symbol rate, and the first bandwidth that correspond to each configuration index in Table 9 represent an association relationship between the sampling frequency, the symbol rate, and the first bandwidth that correspond to each configuration index. For example, if a sampling frequency, a symbol rate, and a first bandwidth that correspond to the configuration index "2" are respectively 3932.16 MHz, 983.04 MHz, and 2 GHz, it indicates that an association relationship between an extended bandwidth and a symbol rate corresponding to the configuration index "2" is that the sampling frequency is 3932.16 MHz, the symbol rate is 983.04 MHz, and the first bandwidth is 2 GHz.

It may be understood that the terminal device may determine a filter parameter, for example, a roll-off factor of a filter, based on the symbol rate and the first bandwidth that correspond to the configuration index. For example, when determining that the symbol rate and the first bandwidth that correspond to the configuration index "1" are respectively 983.04 MHz and 3 GHz, the terminal device may determine that the roll-off factor is equal to (3000-983.04)/983.04≈2. Further, the terminal device may substitute the symbol rate and the roll-off factor into Formula (1) to determine the filter shape.

Optionally, Table 9 may further include a column of transmission parameters of a roll-off factor. That is, the first association relationship further includes an association relationship between the sampling frequency and the roll-off factor.

Optionally, Table 9 may further include a column of transmission parameters of a quantity of signals included in each symbol. That is, the first association relationship further includes an association relationship between the sampling frequency and the quantity of signals included in each symbol.

Based on the foregoing solution, when the terminal device may obtain, by querying Table 8, a symbol rate and a first bandwidth corresponding to a configuration index, the terminal device may determine, based on the symbol rate and the first bandwidth, a roll-off factor corresponding to the index configuration, to determine the filtering waveform.

Manner C: The first association relationship includes a configuration index, and a sampling frequency and a symbol rate that correspond to the configuration index.

Specifically, the first association relationship in Manner C may be represented by using the following Table 10. Table 10 may include 28 configuration indexes. For omitted configuration indexes and corresponding sampling frequencies, oversampling factors, and roll-off factors, refer to Table 5. Table 10 may also include some of the 28 configuration indexes, and sampling frequencies, oversampling factors, and roll-off factors corresponding to these configuration indexes.

**Table 10 Transmission configuration information table**

| Configuration index | Sampling frequency Fₛ (MHz) | Oversampling factor | Roll-off factor |
|---|---|---|---|
| 0 | 3932.16 | 4/1 | 4 |
| 1 | | | 3 |
| 2 | | | 2 |
| 3 | | | 1.5 |
| ... | | | |
| 26 | 3932.16 | 2/3 | 4 |
| 27 | | | 3.4 |

When receiving the first information, the terminal device searches Table 10 for the sampling frequency, the oversampling factor, and the roll-off factor that correspond to the first information, that is, searches for the sampling frequency, the oversampling factor, and the roll-off factor that correspond to the configuration index indicated by the first information. It may be understood that a sampling frequency, an oversampling factor, and a roll-off factor that correspond to each configuration index in Table 10 represent an association relationship between the sampling frequency, the oversampling factor, and the roll-off factor that correspond to each configuration index. For example, if a sampling frequency, an oversampling factor, and a roll-off factor that correspond to the configuration index "0" are respectively 3932.16 MHz, 4/1, and 4, it indicates that an association relationship between the sampling frequency, the oversampling factor, and the roll-off factor that correspond to the configuration index "0" is that the sampling frequency is 3932.16 MHz, the oversampling factor is 4/1, and the roll-off factor is 4.

It may be understood that the terminal device may obtain a symbol rate through calculation based on the sampling frequency and the oversampling factor that correspond to the configuration index, and according to the symbol rate=the sampling frequency/the oversampling factor. For example, if the sampling frequency corresponding to the configuration index "0" is 3932.16 MHz, and the oversampling factor is 1/4, the symbol rate F_{c}=Fₛ*L/M=3932.16*1/4=983.04 MHz.

It may be understood that the sampling frequency in Table 10 may alternatively be combined with the oversampling factor into one column for representation, for example, the sampling frequency (oversampling factor) or the sampling frequency (1/oversampling factor). For example, the sampling frequency corresponding to the configuration index "0" may be represented as 3932.16 MHz (4/1) or 3932.16 MHz (1/4).

Optionally, Table 10 may further include a column of transmission parameters of the symbol rate, that is, the first association relationship further includes an association relationship between the sampling frequency and the symbol rate.

Optionally, Table 10 may further include a column of transmission parameters of the first bandwidth, that is, the first association relationship further includes an association relationship between the sampling frequency and the first bandwidth.

Optionally, Table 10 may further include a column of transmission parameters of a quantity of signals included in each symbol, that is, the first association relationship further includes an association relationship between the sampling frequency and the quantity of signals included in each symbol.

Based on the foregoing solution, when the terminal device may obtain, by querying Table 10, a sampling frequency, an oversampling factor, and a roll-off factor that correspond to a configuration index, the terminal device may determine a symbol rate based on the sampling frequency and the oversampling factor, and further determine a filtering shape based on the symbol rate and the roll-off factor.

Finally, apparatus embodiments in embodiments of this application are described.

To implement functions in the methods provided in this application, both a terminal device and a network device may include a hardware structure and/or a software module, and implement the foregoing functions in a form of the hardware structure, the software module, or the hardware structure plus the software module. Whether a function in the foregoing functions is performed by using the hardware structure, the software module, or the combination of the hardware structure and the software module depends on particular applications and design constraints of the technical solutions.

FIG. 10 is a block diagram of a communication apparatus 1000 according to an embodiment of this application. The communication apparatus 1000 includes a processor 1010 and a communication interface 1020. The processor 1010 and the communication interface 1020 may be connected to each other through a bus 1030. The communication apparatus 1000 may be a terminal device or a network device.

Optionally, the communication apparatus 1000 may further include a memory 1040. The memory 1040 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1040 is used for related instructions and data.

The processor 1010 may be one or more central processing units (central processing units, CPUs). When the processor 1010 is one CPU, the CPU may be a single-core CPU, or may be a multi-core CPU.

When the communication apparatus 1000 is a terminal device, for example, the processor 1010 is configured to perform the following operations: determining a first parameter group based on a first association relationship and a first index; and sending a first signal based on the first parameter group.

When the communication apparatus 1000 is a network device, for example, the processor 1010 is configured to perform the following operations: sending, based on a first association relationship, a first index corresponding to a first parameter group; and receiving a first signal based on the first parameter group.

The foregoing content is merely used as an example for description. When the communication apparatus 1000 is a terminal device or a network device, the communication apparatus is responsible for performing a method or steps related to the terminal device or the network device in the foregoing method embodiments.

The foregoing descriptions are merely examples for description. For specific content, refer to the content shown in the method embodiments. For implementations of the operations in FIG. 10, refer to the corresponding descriptions of the method embodiments shown in FIG. 7 to FIG. 9.

FIG. 11 is a block diagram of a communication apparatus 1100 according to an embodiment of this application. The communication apparatus 1100 may be a terminal device or a network device, or may be a chip or a module in the terminal device or the network device, configured to implement the methods in the foregoing embodiments.

The communication apparatus 1100 includes a transceiver unit 1110 and a processing unit 1120. The transceiver unit 1110 may include a sending unit and a receiving unit. The sending unit is configured to perform a sending action of the communication apparatus. The receiving unit is configured to perform a receiving action of the communication apparatus. For ease of description, in this embodiment of this application, the sending unit and the receiving unit are combined into one transceiver unit. Unified descriptions are provided herein, and details are not described below again.

When the communication apparatus 1100 is a terminal device, for example, the transceiver unit 1110 is configured to send a first signal. The processing unit 1120 is configured to perform content of steps such as processing and coordination related to the terminal device. For example, the processing unit 1120 is configured to determine a first parameter group based on a first association relationship and a first index.

When the communication apparatus 1100 is a network device, for example, the transceiver unit 1110 is configured to receive a first signal. The processing unit 1120 is configured to perform content of steps such as processing and coordination related to the network device. For example, the processing unit 1120 is configured to send, based on a first association relationship, a first index corresponding to a first parameter group; and receive the first signal based on the first parameter group.

The foregoing content is merely used as an example for description. When the communication apparatus 1100 is a terminal device or a network device, the communication apparatus is responsible for performing a method or steps related to the terminal device or the network device in the foregoing method embodiments.

Optionally, the communication apparatus 1100 further includes a storage unit 1130. The storage unit 1130 is configured to store a program or code used to perform the foregoing methods.

The apparatus embodiments shown in FIG. 10 and FIG. 11 are used for implementing content described in FIG. 7 to FIG. 9. For specific execution steps and methods of the apparatuses shown in FIG. 10 and FIG. 11, refer to content described in the foregoing method embodiments.

FIG. 12 is a block diagram of a communication apparatus 1200 according to an embodiment of this application. The communication apparatus 1200 is configured to implement a function of a terminal device or a network device. The communication apparatus 1200 may be a chip in the terminal device or the network device.

The communication apparatus 1200 includes an input/output interface 1220 and a processor 1210. The input/output interface 1220 may be an input/output circuit. The processor 1210 may be a signal processor, a chip, or another integrated circuit that can implement the method in this application. The input/output interface 1220 is configured to input or output a signal or data.

For example, when the communication apparatus 1200 is a terminal device, the input/output interface 1220 is configured to receive first information. The processor 1210 is configured to determine a first parameter group based on a first association relationship and a first index. The processor 1210 is further configured to perform some or all steps of any method provided in this application.

For example, when the communication apparatus 1200 is a network device, the input/output interface 1220 is configured to send first information. The processor 1210 is further configured to perform some or all steps of any method provided in this application, for example, process a first signal and the like.

In a possible implementation, the processor 1210 executes instructions stored in a memory, to implement the function implemented by the terminal device or the network device.

Optionally, the communication apparatus 1200 further includes the memory.

Optionally, the processor and the memory are integrated together.

Optionally, the memory is disposed outside the communication apparatus 1200.

In a possible implementation, the processor 1210 may be a logic circuit, and the processor 1210 inputs/outputs a message or signaling through the input/output interface 1220. The logic circuit may be a signal processor, a chip, or another integrated circuit that can implement the method in embodiments of this application.

The foregoing descriptions of the communication apparatus 1200 are merely an example for description. The communication apparatus 1200 can be configured to perform the method in the foregoing embodiments. For specific content, refer to the descriptions of the foregoing method embodiments. Details are not described herein again.

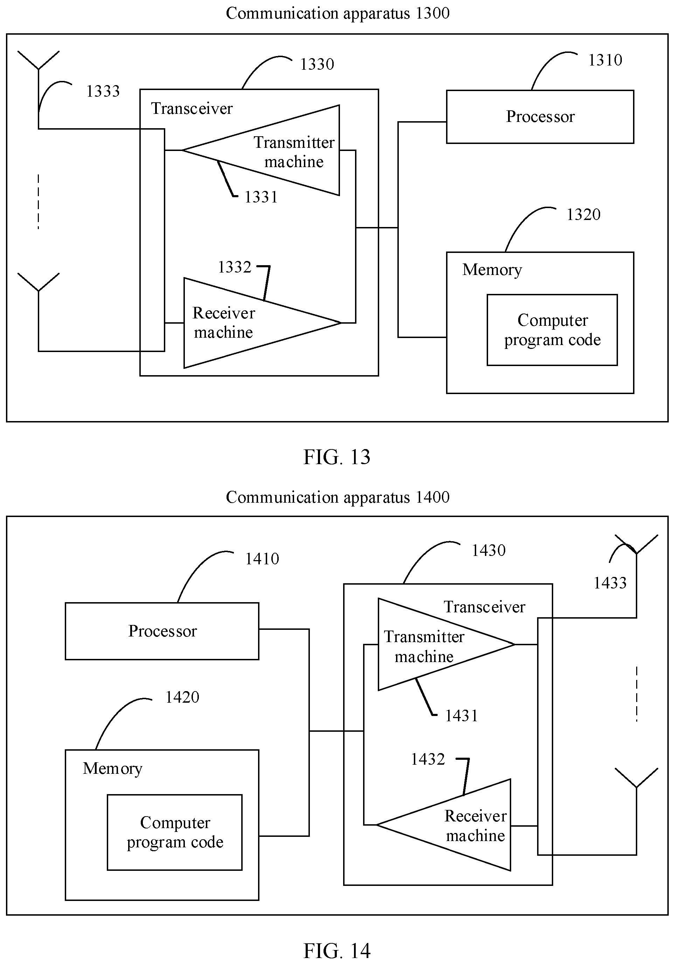

FIG. 13 is a block diagram of a communication apparatus 1300 according to an embodiment of this application. The communication apparatus 1300 may be a network device or a chip. The communication apparatus 1300 is configured to perform operations performed by the network device in the method embodiments shown in FIG. 7 to FIG. 9.

When the communication apparatus 1300 is a network device, for example, a base station. FIG. 13 is a diagram of a simplified structure of the base station. The base station includes a module 1310, a module 1320, and a module 1330. The module 1310 is mainly configured to: perform baseband processing, control the base station, and the like. The module 1310 is usually a control center of the base station, may be usually referred to as a processor, and is configured to control the base station to perform a processing operation on a network device side in the foregoing method embodiments. The module 1320 is mainly configured to store computer program code and data. The module 1330 is mainly configured to: send and receive a radio frequency signal, and perform conversion between the radio frequency signal and a baseband signal. The module 1330 may be usually referred to as a transceiver module, a transceiver machine, a transceiver circuit, a transceiver, or the like. A transceiver module in the module 1330 may also be referred to as a transceiver machine, a transceiver, or the like. The transceiver module includes an antenna 1333 and a radio frequency circuit (not shown in FIG. 13). The radio frequency circuit is mainly configured to perform radio frequency processing.

Optionally, a component for implementing a receiving function in the module 1330 may be considered as a receiver machine, and a component configured to implement a sending function may be considered as a transmitter machine. In other words, the module 1330 includes a receiver machine 1332 and a transmitter machine 1331. The receiver machine may also be referred to as a receiving module, a receiver, a receiver circuit, or the like. The transmitter machine may be referred to as a transmitting module, a transmitter, a transmitter circuit, or the like.

The module 1310 and the module 1320 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, the plurality of boards share one or more memories, or the plurality of boards share one or more processors at the same time.

For example, in an implementation, the transceiver module of the module 1330 is configured to perform a receiving/sending-related process performed by the network device in the embodiments shown in FIG. 7 to FIG. 9. The processor of the module 1310 is configured to perform a processing-related process performed by the network device in the embodiments shown in FIG. 7 to FIG. 9.

FIG. 13 is merely an example rather than a limitation. The network device including the processor, the memory, and the transceiver may not depend on the structures shown in FIG. 10 to FIG. 12.

When the communication apparatus 1300 is a chip, the chip includes a transceiver, a memory, and a processor. The transceiver may be an input/output circuit or a communication interface. The processor is a processor, a microprocessor, or an integrated circuit integrated on the chip. The sending operation of the network device in the foregoing method embodiments may be understood as an output of the chip, and the receiving operation of the network device in the foregoing method embodiments may be understood as an input of the chip.

FIG. 14 is a block diagram of a communication apparatus 1400 according to an embodiment of this application. The communication apparatus 1400 may be a terminal device, or a processor or a chip of the terminal device. The communication apparatus 1400 may be configured to perform operations performed by the terminal device in the foregoing method embodiments.

When the communication apparatus 1400 is a terminal device, FIG. 14 is a diagram of a simplified structure of the terminal device. As shown in FIG. 14, the terminal device includes a processor, a memory, and a transceiver. The memory may store computer program code. The transceiver includes a transmitter machine 1431, a receiver machine 1432, a radio frequency circuit (not shown in FIG. 14), an antenna 1433, and an input/output apparatus (not shown in FIG. 14).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 14 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 14, the terminal device includes a processor 1410, a memory 1420, and a transceiver 1430. The processor 1410 may be referred to as a processing unit, a processing board, a processing module, a processing apparatus, or the like. The transceiver 1430 may also be referred to as a transceiver unit, a transceiver machine, a transceiver apparatus, or the like.

Optionally, a component that is in the transceiver 1430 and that is configured to implement a receiving function may be considered as a receiving module, and a component that is in the transceiver 1430 and that is configured to implement a sending function may be considered as a sending module. In other words, the transceiver 1430 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 1410 is configured to perform processing actions of the terminal device in the embodiments shown in FIG. 7 to FIG. 9, and the transceiver 1430 is configured to perform receiving and sending actions of the terminal device in FIG. 7 to FIG. 9.

FIG. 14 is merely an example rather than a limitation. The terminal device including the transceiver module and the processing module may not depend on the structures shown in FIG. 10 to FIG. 12.

When the communication apparatus 1400 is a chip, the chip includes a processor, a memory, and a transceiver. The transceiver may be an input/output circuit or a communication interface. The processor may be a processing module, a microprocessor, or an integrated circuit integrated on the chip.

The sending operation of the terminal device in the foregoing method embodiments may be understood as an output of the chip, and the receiving operation of the terminal device in the foregoing method embodiments may be understood as an input of the chip.

This application further provides a chip, including a processor, configured to invoke, from a memory, instructions stored in the memory and run the instructions, so that a communication device in which the chip is installed performs the methods in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor, configured to couple to a memory, and perform the method and function related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that, in combination with examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve objectives of the solutions of embodiments.

In addition, functional units in embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

## Claims

1. A signal transmission method, comprising:
receiving first information, wherein the first information indicates a first index corresponding to a first signal, wherein
the first signal is carried on a single carrier for transmission, the first index indicates a first parameter group in a first association relationship, the first association relationship comprises a plurality of indexes and a plurality of parameter groups respectively corresponding to the plurality of indexes, and the first parameter group is a parameter group associated with the first index;
the parameter group comprises a sampling frequency and/or a symbol rate; and
the sampling frequency is equal to a sampling frequency corresponding to one subcarrier spacing of a multi-carrier waveform, and a symbol period determined based on the symbol rate is equal to a symbol period of one subcarrier spacing of the multi-carrier waveform; and
transmitting the first signal based on the first parameter group.

2. The method according to claim 1, wherein before receiving the first information, the method further comprises:
sending second information, wherein the second information indicates that the terminal device supports transmission of a signal using a single-carrier waveform, or the second information is used to request transmission of a signal using a single-carrier waveform.

3. The method according to claim 1 or 2, wherein the sampling frequency=15 kHz × 2*^{c}*, and c is a positive integer.

4. The method according to any one of claims 1 to 3, wherein a modulation scheme corresponding to at least one of the plurality of parameter groups is quadrature amplitude modulation or offset quadrature amplitude modulation, and the sampling frequency is 3932.16 MHz.

5. The method according to claim 4, wherein the modulation scheme corresponding to the at least one of the plurality of parameter groups is the quadrature amplitude modulation, and the symbol rate is one of 983.04 MHz, 1310.7 MHz, 1966.08 MHz, 2621.4 MHz, or 2949.12 MHz.

6. The method according to claim 4, wherein the modulation scheme corresponding to the at least one of the plurality of parameter groups is the offset quadrature amplitude modulation, and the symbol rate is one of 1966.08 MHz, 2621.44 MHz, 3932.16 MHz, 5242.8 MHz, or 5898.24 MHz.

7. The method according to any one of claims 4 to 6, wherein the at least one of the plurality of parameter groups further comprises an oversampling factor, and the symbol rate and the oversampling factor meet at least one of the following:
the symbol rate is 983.04 MHz, and the oversampling factor is 4/1;
the symbol rate is 1966.08 MHz, and the oversampling factor is 2/1;
the symbol rate is 1310.7 MHz, and the oversampling factor is 3/1;
the symbol rate is 2621.44 MHz, and the oversampling factor is 3/2;
the symbol rate is 3932.16 MHz, and the oversampling factor is 1/1;
the symbol rate is 5242.8 MHz, and the oversampling factor is 3/4;
the symbol rate is 2949.12 MHz, and the oversampling factor is 4/3; or
the symbol rate is 5898.24 MHz, and the oversampling factor is 2/3.

8. The method according to any one of claims 4 to 7, wherein the at least one of the plurality of parameter groups further comprises a roll-off factor, and the roll-off factor and the symbol rate meet one of the following:
the symbol rate is 983.04 MHz or 1966.08 MHz, and the roll-off factor is 3;
the symbol rate is 983.04 MHz or 1966.08 MHz, and the roll-off factor is 2;
the symbol rate is 983.04 MHz or 1966.08 MHz, and the roll-off factor is 1;
the symbol rate is 983.04 MHz or 1966.08 MHz, and the roll-off factor is 0.5;
the symbol rate is 1310.7 MHz or 2621.44 MHz, and the roll-off factor is 2;
the symbol rate is 1310.7 MHz or 2621.44 MHz, and the roll-off factor is 1.25;
the symbol rate is 1310.7 MHz or 2621.44 MHz, and the roll-off factor is 0.5;
the symbol rate is 1966.08 MHz or 3932.16 MHz, and the roll-off factor is 1;
the symbol rate is 1966.08 MHz or 3932.16 MHz, and the roll-off factor is 0.5;
the symbol rate is 1966.08 MHz or 3932.16 MHz, and the roll-off factor is 0.25;
the symbol rate is 2621.4 MHz or 5242.8 MHz, and the roll-off factor is 0.5;
the symbol rate is 2621.4 MHz or 5242.8 MHz, and the roll-off factor is 0.125;
the symbol rate is 2949.12 MHz or 5898.24 MHz, and the roll-off factor is 0.33; or
the symbol rate is 2949.12 MHz or 5898.24 MHz, and the roll-off factor is 0.125.

9. The method according to any one of claims 4 to 8, wherein the at least one of the plurality of parameter groups further comprises a first bandwidth, the first bandwidth is used to transmit the first signal, and the symbol rate and the first bandwidth meet at least one of the following:
the symbol rate is 983.04 MHz or 1966.08 MHz, and the first bandwidth is 4 GHz;
the symbol rate is 983.04 MHz or 1966.08 MHz, and the first bandwidth is 3 GHz;
the symbol rate is 983.04 MHz or 1966.08 MHz, and the first bandwidth is 2 GHz;
the symbol rate is 983.04 MHz or 1966.08 MHz, and the first bandwidth is 1.5 GHz;
the symbol rate is 1310.7 MHz or 2621.44 MHz, and the first bandwidth is 4 GHz;
the symbol rate is 1310.7 MHz or 2621.44 MHz, and the first bandwidth is 3 GHz;
the symbol rate is 1310.7 MHz or 2621.44 MHz, and the first bandwidth is 2 GHz;
the symbol rate is 1966.08 MHz or 3932.16 MHz, and the first bandwidth is 4 GHz;
the symbol rate is 1966.08 MHz or 3932.16 MHz, and the first bandwidth is 3 GHz;
the symbol rate is 1966.08 MHz or 3932.16 MHz, and the first bandwidth is 2.5 GHz;
the symbol rate is 2621.4 MHz or 5242.8 MHz, and the first bandwidth is 4 GHz;
the symbol rate is 2621.4 MHz or 5242.8 MHz, and the first bandwidth is 3 GHz;
the symbol rate is 2949.12 MHz or 5898.24 MHz, and the first bandwidth is 4 GHz; or
the symbol rate is 2949.12 MHz or 5898.24 MHz, and the first bandwidth is 3.4 GHz.

10. The method according to any one of claims 1 to 9, wherein the at least one of the plurality of parameter groups further comprises a first coefficient, and the first coefficient is a quantity of signals in each symbol in the first signal.

11. The method according to claim 10, wherein the first coefficient meets one of the following:
a modulation scheme of the first signal is the quadrature amplitude modulation, and the first coefficient is 256; or
a modulation scheme of the first signal is the offset quadrature amplitude modulation, and the first coefficient is 512.

12. The method according to any one of claims 1 to 11, wherein the first association relationship is predefined in a protocol.

13. An information transmission method, wherein the method comprises:
sending first information, wherein the first information indicates a first index corresponding to a first signal, wherein
the first signal is carried on a single carrier for transmission, the first index indicates a first parameter group in a first association relationship, the first association relationship comprises a plurality of indexes and a plurality of parameter groups respectively corresponding to the plurality of indexes, and the first parameter group is a parameter group associated with the first index;
the parameter group comprises a sampling frequency and/or a symbol rate; and
the sampling frequency is equal to a sampling frequency corresponding to one subcarrier spacing of a multi-carrier waveform, and a symbol period determined based on the symbol rate is equal to a symbol period of one subcarrier spacing of the multi-carrier waveform; and
transmitting the first signal based on the first parameter group.

14. The method according to claim 13, wherein before sending the first information, the method further comprises:
receiving second information, wherein the second information indicates that a terminal device supports transmission of a signal using a single-carrier waveform, or the second information is used to request transmission of a signal using a single-carrier waveform.

15. The method according to claim 13 or 14, wherein the sampling frequency is 15 kHz × 2*^{C}*, and C is a positive integer.

16. The method according to any one of claims 13 to 15, wherein a modulation scheme corresponding to at least one of the plurality of parameter groups is quadrature amplitude modulation or offset quadrature amplitude modulation, and the sampling frequency is 3932.16 MHz.

17. The method according to claim 16, wherein the modulation scheme corresponding to the at least one of the plurality of parameter groups is the quadrature amplitude modulation, and the symbol rate is one of 983.04 MHz, 1310.7 MHz, 1966.08 MHz, 2621.4 MHz, or 2949.12 MHz.

18. The method according to claim 16, wherein the modulation scheme corresponding to the at least one of the plurality of parameter groups is the offset quadrature amplitude modulation, and the symbol rate is one of 1966.08 MHz, 2621.44 MHz, 3932.16 MHz, 5242.8 MHz, or 5898.24 MHz.

19. The method according to any one of claims 16 to 18, wherein the at least one of the plurality of parameter groups further comprises an oversampling factor, and the symbol rate and the oversampling factor meet at least one of the following:
the symbol rate is 983.04MHz, and the oversampling factor is 4/1;
the symbol rate is 1966.08 MHz, and the oversampling factor is 2/1;
the symbol rate is 1310.7 MHz, and the oversampling factor is 3/1;
the symbol rate is 2621.44 MHz, and the oversampling factor is 3/2;
the symbol rate is 3932.16 MHz, and the oversampling factor is 1/1;
the symbol rate is 5242.8 MHz, and the oversampling factor is 3/4;
the symbol rate is 2949.12 MHz, and the oversampling factor is 4/3; or
the symbol rate is 5898.24 MHz, and the oversampling factor is 2/3.

20. The method according to any one of claims 16 to 19, wherein the at least one of the plurality of parameter groups further comprises a roll-off factor, and the roll-off factor and the symbol rate meet one of the following:
the symbol rate is 983.04 MHz or 1966.08 MHz, and the roll-off factor is 3;
the symbol rate is 983.04 MHz or 1966.08 MHz, and the roll-off factor is 2;
the symbol rate is 983.04 MHz or 1966.08 MHz, and the roll-off factor is 1;
the symbol rate is 983.04 MHz or 1966.08 MHz, and the roll-off factor is 0.5;
the symbol rate is 1310.7 MHz or 2621.44 MHz, and the roll-off factor is 2;
the symbol rate is 1310.7 MHz or 2621.44 MHz, and the roll-off factor is 1.25;
the symbol rate is 1310.7 MHz or 2621.44 MHz, and the roll-off factor is 0.5;
the symbol rate is 1966.08 MHz or 3932.16 MHz, and the roll-off factor is 1;
the symbol rate is 1966.08 MHz or 3932.16 MHz, and the roll-off factor is 0.5;
the symbol rate is 1966.08 MHz or 3932.16 MHz, and the roll-off factor is 0.25;
the symbol rate is 2621.4 MHz or 5242.8 MHz, and the roll-off factor is 0.5;
the symbol rate is 2621.4 MHz or 5242.8 MHz, and the roll-off factor is 0.125;
the symbol rate is 2949.12 MHz or 5898.24 MHz, and the roll-off factor is 0.33; or
the symbol rate is 2949.12 MHz or 5898.24 MHz, and the roll-off factor is 0.125.

21. The method according to any one of claims 16 to 20, wherein the at least one of the plurality of parameter groups further comprises a first bandwidth, the first bandwidth is used to transmit the first signal, and the symbol rate and the first bandwidth meet at least one of the following:
the symbol rate is 983.04 MHz or 1966.08 MHz, and the first bandwidth is 4 GHz;
the symbol rate is 983.04 MHz or 1966.08 MHz, and the first bandwidth is 3 GHz;
the symbol rate is 983.04 MHz or 1966.08 MHz, and the first bandwidth is 2 GHz;
the symbol rate is 983.04 MHz or 1966.08 MHz, and the first bandwidth is 1.5 GHz;
the symbol rate is 1310.7 MHz or 2621.44 MHz, and the first bandwidth is 4 GHz;
the symbol rate is 1310.7 MHz or 2621.44 MHz, and the first bandwidth is 3 GHz;
the symbol rate is 1310.7 MHz or 2621.44 MHz, and the first bandwidth is 2 GHz;
the symbol rate is 1966.08 MHz or 3932.16 MHz, and the first bandwidth is 4 GHz;
the symbol rate is 1966.08 MHz or 3932.16 MHz, and the first bandwidth is 3 GHz;
the symbol rate is 1966.08 MHz or 3932.16 MHz, and the first bandwidth is 2.5 GHz;
the symbol rate is 2621.4 MHz or 5242.8 MHz, and the first bandwidth is 4 GHz;
the symbol rate is 2621.4 MHz or 5242.8 MHz, and the first bandwidth is 3 GHz;
the symbol rate is 2949.12 MHz or 5898.24 MHz, and the first bandwidth is 4 GHz; or
the symbol rate is 2949.12 MHz or 5898.24 MHz, and the first bandwidth is 3.4 GHz.

22. The method according to any one of claims 13 to 21, wherein the at least one of the plurality of parameter groups further comprises a first coefficient, and the first coefficient is a quantity of signals in each single-carrier symbol in the first signal.

23. The method according to claim 22, wherein the first coefficient meets one of the following:
a modulation scheme of the first signal is the quadrature amplitude modulation, and the first coefficient is 256; or
a modulation scheme of the first signal is the offset quadrature amplitude modulation, and the first coefficient is 512.

24. A signal transmission apparatus, comprising a processor, wherein the processor is configured to execute a computer program or instructions, or to use a logic circuit,
so that the communication apparatus performs the method according to any one of claims 1 to 12; or
so that the communication apparatus performs the method according to any one of claims 13 to 23.

25. A signal transmission apparatus, comprising a logic circuit and an input/output interface, wherein the input/output interface is configured to input and/or output a signal; and
the logic circuit is configured to perform the method according to any one of claims 1 to 12; or
the logic circuit is configured to perform the method according to any one of claims 13 to 23.

26. A computer-readable storage medium, wherein the computer-readable storage medium stores a computer program or instructions; and when the computer program or the instructions are run on a computer,
the method according to any one of claims 1 to 12 is performed; or
the method according to any one of claims 13 to 23 is performed.

27. A computer program product, comprising instructions, wherein when the instructions are run on a computer,
the method according to any one of claims 1 to 12 is performed; or
the method according to any one of claims 13 to 23 is performed.
